# EUROPEAN PATENT SPECIFICATION

(11) **EP 4 344 551 B1**
(45) Date of publication and mention of the grant of the patent: **29.10.2025**
(21) Application number: 22198455.2
(22) Date of filing: 28.09.2022
(51) Int. Cl.: A23C 15/02, A23C 15/12

(54) **NOVEL METHOD OF PRODUCING BUTTER-LIKE PRODUCTS AND THE OBTAINABLE BUTTER-LIKE PRODUCTS**
NEUES VERFAHREN ZUR HERSTELLUNG BUTTERÄHNLICHER PRODUKTE UND SO ERHÄLTLICHE BUTTERÄHNLICHE PRODUKTE
NOUVEAU PROCÉDÉ DE PRODUCTION DE PRODUITS DE TYPE BEURRE ET PRODUITS DE TYPE BEURRE POUVANT ÊTRE OBTENUS

(43) Date of publication of application: 03.04.2024
(73) Proprietor: Arla Foods amba, 8260 Viby J (DK)
(72) Inventor: SUWAL, Shyam Krishna, 8260 Viby J (DK); ANDERSEN, Ulf, 8260 Viby J (DK); TIMM, Laura Marloth, 8260 Viby J (DK); JOHANSEN, Frederik Tage, 8260 Viby J (DK)
(74) Representative: Guardian IP Consulting I/S

(56) References cited:
- FR-A- 588 993
- JUKKOLA A ET AL: "Separation of milk fat globules via microfiltration: Effect of diafiltration media and opportunities for stream valorization", JOURNAL OF DAIRY SCIENCE, vol. 99, no. 11, 2016, pages 8644 - 8654, XP029776250, ISSN: 0022-0302, DOI: 10.3168/JDS.2016-11422
- FARAH Z ET AL: "MANUFACTURE AND CHARACTERIZATION OF CAMEL MILK BUTTER", MILCHWISSENSCHAFT, VV GMBH VOLKSWIRTSCHAFTLICHER VERLAG. MUNCHEN, DE, vol. 44, no. 7, 1 January 1989 (1989-01-01), pages 412 - 414, XP000027942, ISSN: 0026-3788
- FARAH ZAKARIA: "Composition and characteristics of camel milk", JOURNAL OF DAIRY RESEARCH, vol. 60, no. 4, 1 November 1993 (1993-11-01), GB, pages 603 - 626, XP093102406, ISSN: 0022-0299, DOI: 10.1017/S0022029900027953
- JUKKOLA ANNAMARI ET AL: "Effect of heat treatment and pH on the efficiency of micro-diafiltration for the separation of native fat globules from cream in butter production", JOURNAL OF MEMBRANE SCIENCE, vol. 548, 4 November 2017 (2017-11-04), NL, pages 99 - 107, XP055944126, ISSN: 0376-7388, Retrieved from the Internet <URL:https://www.sciencedirect.com/science/article/pii/S0376738817318914> DOI: 10.1016/j.memsci.2017.11.012

## Description

### FIELD OF THE INVENTION

The present invention pertains to a new method of producing butter-like products based on warm shearing of high fat concentrates of milk fat globules that contain a significant amount of micellar casein. The invention furthermore pertains to the novel butter-like products as such.

### BACKGROUND

Conventional butter production is based on cold churning of cream that has aged (stored at a temperature below 20 degrees C) to provoke partial crystallisation of milk fat in the milk fat globules. The churning process disrupts the membranes of the milk fat globules of the cream and causes the milk fat to aggregate to form larger fat grains which can be separated from the buttermilk.

US 2019/0191731 A1 discloses a method of modification of dry matter composition and/or dry matter content of milk, comprising the steps of:
- providing raw milk having a fat content in the range of about 3 % w/w to about 60 % w/w;
- modifying, e.g. by microfiltration, a dry matter composition and/or dry matter content of the raw milk to provide a modified raw milk having:
   - a fat content in the range of about 35 % w/w to about 60 % w/w based on the total weight of the modified raw milk, and
   - a protein content of at most 3 % w/w and/or carbohydrate content of at most 4 % w/w based on a fat-free portion of the modified raw milk.

WO 89/10700 discloses the production of a fat product based on milk fat where the cream is concentrated by centrifugation to a fat content of 60-85% at a temperature of 50-70 degrees C. The concentrated cream is cooled to a temperature of 15-30 degrees C, and is stored until the milk fat starts to crystallize. The cooled concentrated cream is mixed with vegetable oils in an amount calculated to at least 25% of the amount of fat in the end product. After storage the mixture is stirred gently under cooling in order to achieve a phase reversal.

US 2003/0175399 A1 discloses dairy products having a total fats content lower than or equal to 400 g/kg and a fat globule distribution such that globules of lower diameter than 2.0 microns represent 10% to 60% in weight of the total fats, and the fat globules of higher diameter than to 6 micron represent 10% to 30% in weight of the total fats. The dairy products were produced by microfiltration of milk or mixtures of milk and cream.

WO 2012/110706 discloses a method for producing cheese, comprising the steps of:
- providing a milk raw material,
- subjecting the milk raw material to microfiltration and pre-acidification to produce an acidified casein concentrate, where the microfiltration is performed prior to or simultaneously with the pre-acidification,
- concentrating the acidified casein concentrate to produce full concentrated pre-cheese,
- processing the full concentrated pre-cheese to a cheese product.

Goudedranche et al (Le Lait, INRA Editions, 2000, 80 (1), pp.93-98.) discloses separation of milk fat in small globules (SG) (diameter lower than 2 µm) and in large globules (LG) (diameter higher than 2 µm) using special ceramic microfiltration membranes. Transformations in drinking milks, yoghourts, sour cream, camembert, Swiss cheese and butters were realized from milks of which the fat content was adjusted either by reference cream or by creams issued from the SG or the LG fractions. Significant differences in texture and organoleptic properties were found in the manufactured products. Except for butter, use of milks containing small fat globules led to more onctuous products and finer textural characteristics versus products made with reference creams or with mainly large fat globules. Fat globule membrane appeared to have a high ability to bind water in cheese and so, to allow a significant increase in cheese yield.

FR588993 discloses a process for obtaining butter using an artificial butter oil emulsion prepared by emulsification of pure and concentrated butter oil in water and using e.g. milk solids as emulsifier. The artificial butter oil emulsion is then cooled to 13-19 degrees C and subsequently squeezed or crushed at low temperature until the droplets of emulsified butter oil are completely agglomerated and a product with the appearance of butter is formed.

Farah et al (Milchwissenschaft 44 (1989) no.7, p.412-414) describes the manufacture of camel milk butter. Camel milk is heated to 65 degrees C and separated with a hand centrifuge. The cream is immediately separated a second time and divided into portions. The fat content is adjusted to 20.5, 25 or 30%, and the cream portions are churned at temperatures that are varied between 15 and 36 degrees C. Butter grains were separated from the churned cream, washed in water and frozen for analysis.

### SUMMARY OF THE INVENTION

The present inventors have discovered that a new type of butter-like milk product can be prepared by warm shearing of liquids having a high content of milk fat globules and a significant content of micellar casein relative to the total water content. The new method allows for the production of butter-like products without formation of a sidestream such as buttermilk and is furthermore much faster and requires less energy than the traditional butter-making processes.

Thus, an aspect of the invention pertains to a method of producing a butter-like product, the method comprising the steps of:
a) providing a liquid, milk fat globule composition (Imc), preferably having a temperature in the range of 20-65 degrees C and a pH in the range of 4.5-8,
   the Imc comprising:
   i) milk fat globules (MFG) in an amount of at least 50% w/w of the Imc,
   ii) at least 1.5% w/w micellar casein relative to the weight of the water content of the Imc,
   iii) water, and
   iv) optionally, one or more additional component(s),
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) optionally, combining the milk fat intermediate and one or more further ingredient(s), thereby obtaining a mixture, and
e) optionally, packaging the milk fat intermediate obtained from step c) or the mixture obtained from step d),
wherein the MFG originate from cow milk,
and wherein the butter-like product is the milk fat intermediate obtained from step c), the mixture obtained from step d), or the packaged product obtained from step e).

Another aspect of the invention pertains to the butter-like product obtainable by the present method wherein the milk fat intermediate obtained from step c) is used in an amount sufficient to provide at least 50% w/w of the total fat of the butter-like product.

The butter-like product of the invention has a better texture and spreadability and less brittleness than a conventional butter-like products with a similar fat content.

The butter-like product preferably comprises:
- total fat in an amount in the range of 50-85% w/w, and preferably in the range of 60-85% w/w,
- water in an amount in the range of 10-48% w/w, and preferably in the range of 10-39% w/w
- total protein in an amount in the range of 0-5% w/w,
and the butter-like product preferably has a pH in the range of 4.5-8.

Yet an aspect of the invention pertains to the use of the butter-like product as an ingredient in the production of a food product.

### SUMMARY OF THE FIGURES

Figure 1 shows confocal micrograph images of the products obtained by subjecting samples of the same Imc to homogenization using different pressures as described in Example 1.
Figure 2 shows firmness of the homogenised samples of Example 1.
Figure 3 shows photographs of butter-like spreadable products produced by Example 1 at different pressure.
Figure 4 shows confocal micrograph images of butter-like products produced by microfiltration/diafiltration of cream and subsequent homogenization at different pressures as described in Example 2.
Figure 5 shows the firmness of butter-like products produced in Example 2.
Figure 6 shows confocal micrograph images of the products obtained by subjecting samples of the same Imc (produced by microfiltration/diafiltration of cream treated with sodium citrate to dissolve the casein micelles) to different homogenization pressure as described in Example 3.
Figure 7 shows the firmness of products produced in Example 3.
Figure 8 shows confocal micrographs images of the products produced by homogenization of concentrated cream prepared by microfiltration and diafiltration of washed (protein-reduced) cream as described in Example 4.
Figure 9 shows confocal micrographs images of the products produced by homogenization of concentrated cream enriched with whey protein as described in Example 4.
Figure 10 shows confocal micrographs images of the products produced by homogenization of concentrated cream enriched with sodium caseinate as described in Example 4.
Figure 11 shows the firmness of the products of Example 4 and the effect of adding whey protein or caseinate to a concentrated cream having a low content of micellar casein.

### DETAILED DESCRIPTION

An aspect of the invention pertains to a method of producing a butter-like product, the method comprising the steps of:
a) providing a liquid milk fat globule composition (Imc), preferably having a temperature in the range of 20-65 degrees C and a pH in the range of 4.5-8, the Imc comprising:
   i) milk fat globules (MFG) in an amount of at least 50% w/w,
   ii) at least 1.5% w/w micellar casein relative to the weight of the water content of the Imc,
   iii) water, and
   iv) optionally, one or more additional component(s),
b) optionally, but preferably, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) optionally, combining the milk fat intermediate and one or more further ingredient(s), thereby obtaining a mixture, and
e) optionally, packaging the milk fat intermediate obtained from step c) or the mixture obtained from step d),
and wherein the MFG originate from cow milk,
and wherein the butter-like product is the milk fat intermediate obtained from step c), the mixture obtained from step d), or the packaged product obtained from step e).

In the context of the present invention the term "butter-like product" pertains to the product obtained by the method. The butter-like product has the visual appearance and texture similar to regular butter or spreads prepared by blending butter and vegetable oil, and preferably also similar sensory characteristics. Similar to regular butter, the butter-like product is solid or semi-solid at 5 degrees C but becomes softer when heated to room temperature. The butter-like product typically contains at least 50% w/w fat relative to its total weight and at least 50% w/w milk fat relative to the total amount of fat.

The butter-like product may be the milk fat intermediate as such obtained from step c) if the method does not contain step d) in which one or more further ingredients are added, or alternatively the butter-like product may be the product resulting from step d), or even the packages product obtained from step e).

In the context of the present invention the term "milk fat globules" or "MFG" pertains to milk fat globules that originate from mammal milk and that has preferably been concentrated or separated with no or only limited membrane damage during processing.

The milk of the present invention preferably originate from one or more ruminant species. The MFG sources of the present invention originate from cow milk.

The content of MFG in a Imc can be determined by washing out the non-MFG matter (e.g. by dilution of a sample of Imc in demineralized water, and sequential separation of MFG by gentle centrifugation and re-dilution of the separated MFG in demineralized water) and determining the total solids of the washed MFG preparation.

In the context of the present invention the term "liquid, milk fat globule composition" or "Imc" refers to the liquid that is subjected to the shearing of step c), optionally after having been subjected to the heat-treatment of step b). The Imc has a high content of MFG which typically makes up at least 50% w/w of the total weight of the Imc. The Imc may furthermore contain other fat sources than MFG but the MFG are the primary source of fat of the Imc. Additionally, the Imc comprises water and micellar casein and optionally one or more additional components. The one or more additional components of the Imc typically include minerals, carbohydrate, whey proteins, and small organic molecules.

In the context of the present invention the term "micellar casein" pertains to casein in form of micelle-like structures comprising the difference casein species as well as minerals such as calcium and phosphate. Casein micelles are found in and may be isolated from milk, e.g. by ultra-centrifugation or microfiltration, typically using microfiltration membrane having a pore size that retains casein micelles but allows for the passage of whey protein. The amount of micellar casein is typically determined by separation of the casein micelles in a diluted sample by ultra-centrifugation, preferably by initial equilibration at 30 degrees C for 1 hour and centrifugation at 100,000 g for 1 hour at the same temperature, and subsequent quantification of the amount separated caseins by HPLC, preferably as outlined in Bobe et al, (Separation and Quantification of Bovine Milk Proteins by Reversed-Phase High-Performance Liquid Chromatography; Bobe et al; J. Agric. Food Chem. 1998, 46, 458-463).

In the context of the present invention the term "milk fat intermediate" refers to the sheared Imc obtained from step c).

In step a) of the method the liquid, milk fat globule composition (Imc) is provided.

The Imc comprises one or more MFG source(s) in an amount sufficient to contribute with at least 50% w/w MFG relative to the weight of the Imc, and optionally comprises one or more additional ingredient(s).

The provision of the Imc typically comprises providing one or more MFG source(s) and optionally mixing the one or more MFG source(s) with one or more additional ingredients.

More specifically, the Imc is typically prepared by one of the following:
- providing a single MFG source which will be the Imc,
- mixing two or more MFG sources.
- mixing a single MFG source with one or more additional ingredient(s), or
- mixing two or more MFG sources with one or more additional ingredient(s).

In the context of the present invention the term "MFG source" pertains to an ingredient that contains MFG. It is particularly preferred that Imc is prepared using at least one MFG source that contains MFG in an amount of at least 50% w/w relative to the weight of the source, preferably prepared by microfiltration and/or centrifugation of milk, cream, or a mixture thereof.

Preferably, water makes up at least 75% w/w of the non-fat weight of a MFG source, and even more preferably water makes up in the range of 75-95% w/w of the non-fat weight of a MFG source.

In some preferred embodiments of the present invention, at least 50% w/w of the MFG of the Imc is provided by one or more MFG source(s) containing MFG in an amount of at least 50% w/w relative to the weight of the source, preferably prepared by microfiltration and/or centrifugation of milk, cream, or a mixture thereof.

In other preferred embodiments of the present invention, at least 50% w/w of the MFG of the Imc is provided by one or more MFG source(s) containing MFG in an amount of at least 55% w/w relative to the weight of the source, preferably prepared by microfiltration and/or centrifugation of milk, cream, or a mixture thereof.

Often, at least 50% w/w, more preferably at least 60% w/w, even more preferably at least 80% w/w, and most preferably at least 90% w/w of the MFG of the Imc are provided by one or more MFG source(s) containing MFG in an amount in the range 50-75% w/w relative to the weight of the source.

In some preferred embodiments of the present invention, at least 50% w/w, more preferably at least 60% w/w, even more preferably at least 80% w/w, and most preferably at least 90% w/w of the MFG of the Imc are provided by one or more MFG source(s) containing MFG in an amount in the range 55-65% w/w relative to the weight of the source.

If mixing is required for the preparation of the Imc, the MFG source(s) and additional ingredient(s) are mixed in the amounts required to obtain the desired composition of the Imc, e.g. in relation to the content of MFG, total fat, total protein, micellar casein, water, and other components.

If used, the one or more additional ingredient(s) preferably comprise one or more of the following:
- water
- fermented milk product, preferably added in an amount in the range of 1-5% w/w relative to the weight of the mixture, more preferably 1.2-4%, and most preferably in the range of 1.5-3% w/w relative to the weight of the mixture,
- sodium chloride, preferably added in an amount in the range of 0.1-4.5% w/w relative to the weight of the mixture, more preferably 0.5-3.0% w/w, and most preferably 0.8-1.5% w/w relative to the weight of the mixture,
- a flavouring agent, preferably diacetyl,
- a colouring agent,
- a food acceptable preservative, preferably sodium sorbate,
- a polysaccharide hydrocolloid,
- a protein concentrate, preferably a whey protein concentrate, a concentrate of micellar casein, and/or a milk protein concentrate,
- a fat source, preferably vegetable fat and/or butter,
- a food acceptable antioxidant, and
- a vitamin.

Preferred fat sources are vegetable fat and/or a source of milk fat. A useful source of milk fat, in addition the MFG source(s), is butter. In the present context the term "butter" pertains to dairy butter prepared by traditional churning of cream.

In the context of the present invention the term "vegetable fat" covers fat products of vegetable origin and encompasses both fat products that are liquid at room temperature and fat products that are solid or semi-solid at room temperature. The term "vegetable fat" also covers fat products prepared by processing of fat of vegetable origin, e.g. by fractionation, hydrogenation, refining processes, and/or interesterification.

The vegetable fat preferably comprises or even consists of one or more fats selected from the group of consisting of sunflower fat, corn fat, sesame fat, soya bean fat, palm fat, linseed fat, grape seed fat, rapeseed fat, coconut fat, olive fat, groundnut fat, and combinations thereof. Rapeseed fat is the presently preferred vegetable fat.

The term protein concentrate pertains to an ingredient that contains at least 30% w/w relative to total solids, and more preferably at least 70% w/w protein relative to total solids. A protein may be in the form of a powder or liquid. If in liquid form the solvent is typically water. Preferred protein concentrates are a whey protein concentrate, a concentrate of micellar casein, a milk protein concentrate, or a combination thereof.

The Imc is typically prepared by mixing one or more MFG source(s) with one or more additional ingredients, preferably in amounts sufficient to obtain the desired composition of the Imc, e.g. in relation to the content of MFG, total fat, total protein, micellar casein, water, and other components.

It is sometimes preferred that the one or more MFG source(s) have been pasteurized prior to the preparation of the Imc. As mentioned below it is also feasible to heat-treat the Imc when it has been prepared.

A preferred type of MFG sources are milk fat globule concentrates prepared by a process comprising the steps of:
1) providing a milk fat globule-containing dairy liquid (mfl) comprising total fat in an amount of 3-50% w/w,
2) subjecting the mfl to microfiltration (MF) to concentrate the mfl to a total fat content of at least 50% w/w, and if the mfl already contains 50% w/w fat the microfiltration concentrates the mfl to an even higher fat content.

The milk fat globule concentrates obtained from step 2) of the process may be used as such for preparing the Imc or may be heat-treated as described below prior to the preparation of the Imc.

In some preferred embodiments of the present invention at least 40% w/w, more preferably at least 60% w/w, even more preferably at least 80% w/w, and most preferably at least 90% w/w of the MFG of the Imc are provided by one or more MFG source(s) prepared by a process comprising the steps of:
1) providing a milk fat globule-containing dairy liquid (mfl) comprising total fat in an amount of 3-50% w/w,
2) subjecting the mfl to microfiltration (MF) to concentrate the mfl to a total fat content of at least 50% w/w, and if the mfl already contains 50% w/w fat the microfiltration concentrates the mfl to an even higher fat content.

In other preferred embodiments of the present invention the MFG of the Imc are provided by one or more MFG source(s) prepared by a process comprising the steps of:
1) providing a milk fat globule-containing dairy liquid (mfl) comprising total fat in an amount of 3-50% w/w,
2) subjecting the mfl to microfiltration (MF) to concentrate the mfl to a total fat content of at least 50% w/w, and if the mfl already contains 50% w/w fat the microfiltration concentrates the mfl to an even higher fat content.

In some preferred embodiments of the present invention the Imc is prepared by a process comprising the steps of:
1) providing a milk fat globule-containing dairy liquid (mfl) comprising total fat in an amount of 3-50% w/w,
2) subjecting the mfl to microfiltration (MF) to concentrate the mfl to a total fat content of at least 50% w/w, and if the mfl already contains 50% w/w fat the microfiltration concentrates the mfl to an even higher fat content.

The term "milk fat globule-containing dairy liquid" or "mfl" pertains to a dairy liquid derived from ruminant milk, and which contains milk fat globules from the original milk source. The milk fat globules of the mfl preferably resemble the milk fat globules of the original milk source and have preferably been concentrated with no or only limited membrane damage during processing. It is particularly preferred that most, if not substantially all, of the fat of the mfl is present in the form of milk fat globules.

The original milk source is preferably milk obtained from one or more ruminant species. The mfl is derived from cow milk.

Preferably, the fat of the mfl is milk fat and the proteins of the mfl are proteins found in milk. In some preferred embodiments of the invention the mfl of step 1) comprises or even consists of raw milk, whole milk, milk-derived cream, or a mixture thereof.

Preferably the mfl is a cream having a total fat content in the range of 10-50% w/w, preferably prepared by concentrating milk fat globules from milk, preferably by centrifugation or alternatively by microfiltration.

The mfl of step 1) preferably has a pH in the range of 5.0-8, more preferably 5.5-8.0, even more preferably 6.0-7.5, and most preferably 6.4-7.0.

While a wide range of temperatures can be used, the inventors have found it advantageous that the mfl of step 1) has a temperature in the range of 40-70 degrees C, more preferably 45-70 degrees C, even more preferably 50-65 degrees C, and most preferably 55-60 degrees C.

The mfl of step 1) preferably comprises total protein in an amount in the range of 0.5-5% w/w, more preferably 1-4% w/w, even more preferably 1.5-3.5% w/w, and most preferably 1.5-3.0% w/w.

Alternatively, but also preferred, the mfl of step 1) may comprise total protein in an amount in the range of 0.5-5% w/w, more preferably 0.5-4% w/w, even more preferably 0.5-3% w/w, and most preferably 0.5-1% w/w.

In preferred embodiments of the invention the mfl of step 1) comprises total fat in an amount in the range of 5-50% w/w, more preferably 10-48% w/w, even more preferably 30-46% w/w, and most preferably 35-44% w/w.

The mfl of step 1) typically comprises carbohydrate in an amount in the range of 0-10% w/w, more preferably 0.1-8% w/w, even more preferably 0.5-6% w/w, and most preferably 1-5% w/w.

The mfl of step 1) typically has a weight ratio between total fat and total protein in the range of 5-50, more preferably 10-40, even more preferably 15-30, and most preferably 17-25.

It is particularly preferred that the preparation of the mfl has not involved size reduction of milk fat globules, e.g. by homogenisation and the inventors have seen indications that non-homogenised mfls perform better in the present invention than homogenised mfls, and provide concentrates containing milk fat globules with less damaged globule membranes. It is therefore preferred that the mfl is a non-homogenised mfl. Milk fat globule concentrates based on non-homogenized mfl are also preferred for the preparation of the present bmp.

While not always necessary, it is often preferred that the mfl is heat-treated prior to step 2). Preferably, the mfl has been heat-treated at most 60 minutes prior to the microfiltration, more preferably at most 30 minutes prior to the microfiltration, even more preferred at most 10 minutes prior to the microfiltration and most preferably at most 5 minutes prior to the microfiltration.

The heat-treatment prior to the microfiltration preferably involves heating the mfl to a temperature of at least 70 degrees C for a duration sufficient to obtain at least partial microbial reduction. The duration depends on the temperature and the desired level of microbial reduction. Preferably, the duration is sufficient to reduce content of colony forming units by at least 99%, more preferably by at least 99.9%, even more preferably by at least 99.99% and most preferably by at least 99.999%.

Useful heat-treatments are e.g. 70-80 degrees C for 5-300 seconds.

Preferably, the heat-treatment prior to the microfiltration, if used, denatures at most 50% of the beta-lactoglobulin, more preferably at most 30% of the beta-lactoglobulin, even more preferably at most 25% of the beta-lactoglobulin, and most preferably at most 20% of the beta-lactoglobulin.

The heat-treatment prior to the microfiltration, if used, preferably denatures 1-50% of the beta-lactoglobulin, more preferably 2-30% of the beta-lactoglobulin, even more preferably 3-25% of the beta-lactoglobulin, and most preferably 4-20% of the beta-lactoglobulin.

After the heat-treatment the mfl is preferably cooled to the temperature desired for microfiltration.

Step 2) involves subjecting the mfl to microfiltration to concentrate the mfl to a total fat content of at least 50% w/w. The microfiltration preferably involves the use of a ceramic microfiltration membrane. The microfiltration is operated with one or more membranes that keep the fat globules in the retentate stream(s) and allows smaller components such as free whey proteins, lactose and minerals to enter the permeate stream(s).

The microfiltration of step 2) increases the content of fat on a weight percent basis relative to the fat content of the mfl. Therefore if the mfl already has a fat content of 50% w/w, the microfiltration of step 2) concentrates the mfl to a total fat content higher than 50% w/w.

The MF membrane may also be permeable to at least some of the casein micelles, typically the smaller of casein micelles. It is however preferred that a substantial amount of casein micelles are retained during the concentration.

Step 2) may be implemented as a batch process step, a semi-batch process step or a continuous process step. Implementation as a continuous process step is particularly preferred.

In some preferred embodiments of the invention, the microfiltration of step 2) furthermore involves diafiltration, preferably using a diluent in the form of water or an aqueous solution. Useful diluents are e.g. water, reverse osmosis permeate of milk or whey, nanofiltration permeate of milk or whey, and/or ultrafiltration permeate of milk or whey. The diluent is preferably essentially free of protein.

In other preferred embodiments of the invention, the microfiltration of step 2) does not involve diafiltration.

In some preferred embodiments of the invention, in step 2) the mfl is subjected to MF to concentrate the mfl to a total fat content of at least 52% w/w, more preferably at least 54% w/w, even more preferably at least 58% w/w.

The mfl is preferably concentrated to a total fat content of in the range of 60-85% w/w, more preferably 62-85% w/w, more preferably 65-85% w/w, even more preferably 70-85% w/w, and most preferably 72-82% w/w.

Alternatively, but also preferred, the mfl may e.g. be concentrated to a total fat content of in the range of 50-85% w/w, more preferably 52-85% w/w, even more preferably 54-85% w/w, and most preferably 56-82% w/w.

Concentration of the mfl to a total fat content of 50-70% w/w, more preferably 52-68% w/w, even more preferably 54-66% w/w, and most preferably 56-64% w/w is often advantageous if the milk fat globule concentrate subsequently is to be processed into a low fat, butter-like product.

In some preferred embodiments of the invention the mfl is concentrated to a total fat content of in the range of 70-85% w/w, more preferably 73-85% w/w, even more preferably 76-85% w/w, and most preferably 80-85% w/w.

Concentration of the mfl to a total fat content of 81-85% w/w, more preferably 81-85% w/w, even more preferably 82-85% w/w, and most preferably 82-84% w/w is advantageous if the milk fat globule concentrate subsequently is to be processed into a butter-like product, and particularly into butter as such.

The microfiltration membrane is preferably capable of retaining a substantial portion of the milk fat globules but permeable to native beta-lactoglobulin and preferably also other whey proteins. Often it is also preferred that the microfiltration membrane is permeable to at least the smallest casein micelles.

The inventors have found that it is advantageous to avoid membranes with too large pore sizes as these are blocked by milk fat globules during operation.

In some preferred embodiments of the invention the microfiltration membrane has a pore size in the range of 0.05-2 micron, more preferably 0.05-1.5, even more preferably 0.1-0.8, and most preferably 0.2-0.4 micron.

In other preferred embodiments of the invention the microfiltration membrane has a pore size in the range of 0.1-2 micron, more preferably 0.1-1.5, even more preferably 0.2-1.0, and most preferably 0.2-0.8 micron.

The inventors have found that for some applications it is beneficial to increase the weight ratio between casein and whey protein.

Preferred embodiments of the invention the step 2) is arranged and operated to provide a milk fat globule concentrate having a weight ratio between casein and whey protein of 80:20-99:1, more preferably 80:20-98:2, even more preferably 85:15-98:2, and most preferably 90:10-98:2.

The microfiltration of step 2) preferably involves the use of a ceramic MF membrane. Preferably, the MF membranes used in step 2) are ceramic MF membranes.

In some preferred embodiments of the invention the microfiltration of step 2) involves the use of a ceramic membrane comprising or even consisting of metal oxide and/or metal carbide.

In other preferred embodiments of the invention the microfiltration of step 2) involves the use of a ceramic membrane comprising or even consisting of aluminium oxides, titanium oxides, zirconium oxides, or a combination thereof.

In further preferred embodiments of the invention the microfiltration of step 2) involves the use of a ceramic membrane comprising or even consisting of aluminium carbide, silicon carbide, or a combination thereof.

The inventors have found it advantageous that the MF membrane is a ceramic membrane comprising or even consisting of silicon carbide. Preferably, the MF membrane(s) used in step 2) are ceramic membrane(s) comprising or even consisting of silicon carbide.

The inventors have furthermore found it advantageous to use hydrophilic MF membranes and have seen indications that the use of hydrophilic MF membrane for preparing milk fat globule concentrates containing at least 60% fat, or even at least 50% w/w fat, provides less damage to the milk fat globules.

In some preferred embodiments of the invention the MF membrane has a contact angle against a droplet of distilled water at 20 degrees C of at most 40 degrees, more preferably at most 30 degrees, even more preferably at most 20 degrees, and most preferably at most 15 degrees.

The microfiltration may for example employ monotube or multichannel configurations. Multichannel configuration is particularly preferred.

The microfiltration may be performed in a number of ways e.g. in batch, feed-batch or continuous mode and may involve only a single filter module or multitude of filter modules arranged in series and/or in parallel.

The inventors have found it advantageous to use the mfl at a temperature of at least 40 degrees C in step 2) in order to avoid or at least reduce shear damage of the milk fat globules. Without being bound by theory, it is believed that the low content of solid fat in the milk fat globules at 40 degrees C makes the fat globules more flexible and less likely to disrupt during the microfiltration.

The inventors have furthermore found it advantageous to limit or even avoid the exposure to protein denaturing temperatures during the microfiltration.

Preferably, the temperature of the mfl and MF retentate(s) derived from the mfl during the step 2) is in the range of 40-65 degrees C; more preferably 45-65 degrees C, even more preferably 50-65 degrees C, and most preferably 50-60 degrees C.

In the context of the present invention the term "MF retentate(s)" pertain to both the final retentate resulting from the microfiltration operation of step 2) and to intermediate milk fat globule-containing MF retentates which are present in some implementations of step 2), e.g. if diafiltration is used and/or if the microfiltration involves several MF units operates in series.

The inventors have seen indications that operating the microfiltration with a relatively low transmembrane pressure provides less shear and hence less damage on the milk fat globule membranes than microfiltration at very high transmembrane pressures.

In some preferred embodiments of the invention the microfiltration involves a transmembrane pressure in the range of 0.1-10 bar, more preferably 0.1-5 bar, more preferably 0.2-3 bar, even more preferably 0.3-1.0 bar, and most preferably 0.4-0.6 bar.

In other preferred embodiments of the invention the microfiltration involves a transmembrane pressure of at most 10 bar, more preferably at most 5 bar, more preferably at most 3 bar, even more preferably at most 1 bar, and most preferably at most 0.6 bar.

In further preferred embodiments of the invention the microfiltration involves a transmembrane pressure of at most 0.4 bar, more preferably at most 0.3 bar, even more preferably at most 0.2 bar, and most preferably at most 0.1 bar.

The microfiltration of step 2) is preferably arranged and operated to lose at most 2% w/w of the total fat of the mfl to the microfiltration permeate, more preferably at most 1.5% w/w, even more preferably at most 1.0% w/w, and most preferably at most 0.8% w/w.

In the context of the present invention the term "arranged and operated" means that the microfiltration is implemented and operated to fulfil the mentioned requirement. This means e.g. making an appropriate membrane selection and appropriate choices of operational parameters. Microfiltration as such is well-known to the skilled person and the skilled person is capable of making the appropriate selections and choices based on the guidance provided herein and his/her general technical knowledge.

In other preferred embodiments of the invention the microfiltration of step 2) is arranged and operated to lose at most 5% w/w of the total fat of the mfl to the microfiltration permeate, more preferably at most 3% w/w, even more preferably at most 1% w/w, and most preferably at most 0.5% w/w.

In further preferred embodiments of the invention the microfiltration of step 2) is arranged and operated to lose at most 45% w/w of the total phospholipid of the mfl to the microfiltration permeate, more preferably at most 30% w/w, even more preferably at most 20% w/w, and most preferably at most 16% w/w.

In some preferred embodiments of the invention the microfiltration of step 2) is arranged and operated to lose at most 10% w/w of the total phospholipid of the mfl to the microfiltration permeate, more preferably at most 6% w/w, even more preferably at most 4% w/w, and most preferably at most 2% w/w.

In the context of the present invention the term "microfiltration permeate" pertains to the permeate stream or combined permeate streams resulting from the microfiltration of step 2).

The inventors have observed that it often is beneficial to control the permeate flux during the microfiltration by applying a back-pressure at the permeate side of the MF membrane, e.g. using an appropriate valve. The back-pressure is preferably 0-5 bar and more preferably 0-3 bar. It is often preferred that the back-pressure at the permeate side of the MF membrane is lower than transmembrane pressure.

It may furthermore be preferred to subject the milk fat globule concentrate to a heat-treatment. The heat-treatment of the milk fat globule concentrate preferably involves heating the milk fat globule concentrate to a temperature of at least 70 degrees C for a duration sufficient to obtain at least partial microbial reduction. The duration depends on the temperature and the desired level of microbial reduction. Preferably, the duration is sufficient to reduce content of colony forming units by at least 99%, more preferably by at least 99.9%, even more preferably by at least 99.99% and most preferably by at least 99.999%.

The heat-treatment of the milk fat globule concentrate may e.g. involves heating the concentrate to a temperature in the range of 70-160 degrees C, most preferably 70-95 degrees C and preferably holding the product stream in this temperature range for 1-600 seconds, most preferably for 5-120 seconds.

Another preferred type of MFG sources are milk fat globule concentrates prepared by a process comprising the steps of:
A) providing a milk fat globule-containing dairy liquid (mfl) comprising total fat in an amount of 3-50% w/w,
B) subjecting the mfl to centrifugal fat separation to concentrate the mfl to a total fat content of at least 50% w/w, and if the mfl already contains 50% w/w fat the centrifugal fat separation concentrates the mfl to an even higher fat content.

The milk fat globule concentrates obtained from step 2) of the process may be used as such for preparing the Imc or may be heat-treated as described below prior to the preparation of the Imc.

Features and preferences described in the context of the mfl of step 1) equally apply to the mfl of step A).

In other preferred embodiments of the present invention at least 40% w/w, more preferably at least 60% w/w, even more preferably at least 80% w/w, and most preferably at least 90% w/w of the MFG of the Imc is provided by one or more MFG source(s) prepared by a process comprising the steps of:
A) providing a milk fat globule-containing dairy liquid (mfl) comprising total fat in an amount of 3-50% w/w,
B) subjecting the mfl to centrifugal fat separation to concentrate the mfl to a total fat content of at least 50% w/w, and if the mfl already contains 50% w/w fat the centrifugal fat separation concentrates the mfl to an even higher fat content.

For example, the MFG of the Imc may be provided by one or more MFG source(s) prepared by a process comprising the steps of:
A) providing a milk fat globule-containing dairy liquid (mfl) comprising total fat in an amount of 3-50% w/w,
B) subjecting the mfl to centrifugal fat separation to concentrate the mfl to a total fat content of at least 50% w/w, and if the mfl already contains 50% w/w fat the centrifugal fat separation concentrates the mfl to an even higher fat content.

In some preferred embodiments of the present invention the Imc is prepared by a process comprising the steps of:
A) providing a milk fat globule-containing dairy liquid (mfl) comprising total fat in an amount of 3-50% w/w,
B) subjecting the mfl to centrifugal fat separation to concentrate the mfl to a total fat content of at least 50% w/w, and if the mfl already contains 50% w/w fat the centrifugal fat separation concentrates the mfl to an even higher fat content.

In some preferred embodiments of the present invention the Imc comprises MFG in an amount in the range of 50-85% w/w, more preferably in the range of 55-85% w/w, and most preferably in the range of 60-82% w/w.

The Imc contains water in addition to the MFG and casein micelles.

The Imc preferably has a water content in the range of 10-49% w/w relative to total weight of the Imc, more preferably 10-44% w/w, and most preferably in the range of 10-39% w/w relative to total weight of the Imc.

In other preferred embodiments of the present invention the Imc comprises MFG in an amount in the range of 50-70% w/w, more preferably in the range of 55-68% w/w, and most preferably in the range of 55-65% w/w.

The Imc preferably has a water content in the range of 15-49% w/w relative to total weight of the Imc, more preferably 20-44% w/w, and most preferably in the range of 25-44% w/w relative to total weight of the Imc.

The Imc often comprises total protein in an amount in the range of 0.5-5% w/w, and most preferably in the range of 1-3%.

In some preferred embodiments of the present invention the Imc comprises total protein in an amount in the range of 1.5-16% w/w relative to the water content of the Imc, more preferably 2-14% w/w, even more preferably 3-12% w/w, and most preferably in the range of 4-10% w/w relative to the water content of the Imc.

The inventors have found the presence of micellar casein to be beneficial for the present invention. In some preferred embodiments of the present invention, the Imc comprises micellar casein in an amount of at least 1.5% w/w relative to the water content of the Imc, more preferably at least 2% w/w, even more preferably at least 3% w/w, and most preferably at least 4% w/w relative to the water content of the Imc.

For example, it is preferred that the Imc comprises micellar casein in an amount in the range of 1.5-15% w/w relative to the water content of the Imc, more preferably 2-13% w/w, even more preferably 3-11% w/w, and most preferably in the range of 4-9% w/w relative to the water content of the Imc.

In other preferred embodiments of the present invention the Imc comprises micellar casein in an amount in the range of 3-15% w/w relative to the water content of the Imc, more preferably 4-13% w/w, even more preferably 5-11% w/w, and most preferably in the range of 6-9% w/w relative to the water content of the Imc.

The micellar casein of the Imc is typically provided by one or more of the MFG source(s) and/or by a protein concentrate, e.g. in the form of a milk protein concentrate or a micellar casein concentrate. The micellar casein content of a MFG source can be controlled by removal or addition of micellar casein when when preparing the feed used for producing the MFG source and/or by selecting conditions for producing the MFG source that retains an appropriate amount of micellar casein (e.g. by selecting a microfiltration membrane that retains most, if not all, of the micellar casein).

In some preferred embodiments of the present invention the Imc comprises micellar casein in an amount of at least 50% w/w relative to total protein, more preferably at least 80% w/w, even more preferably at least at least 90% w/w, and most preferably at least 94% w/w relative to total protein.

In some preferred embodiments of the present invention whey protein makes up at least 50% w/w of the protein of the Imc that is not micellar casein, more preferably at least 60% w/w, even more preferably at least 70% w/w and most preferably at least 80% w/w of the protein of the Imc that is not micellar casein.

The inventors have found that it is advantageous to limit the content of caseinates, such as e.g. sodium caseinate and/or potassium caseinate, in the Imc. In some preferred embodiments of the present invention the Imc comprises caseinates in an amount of at most 30% w/w relative to total protein, more preferably at most 20% w/w, even more preferably at most 10% w/w, and most preferably at most 5% w/w relative to total protein. Most preferably the Imc does not contain caseinates.

The pH of the Imc is typically in the near-neutral to slightly acidic pH range.

In some preferred embodiments of the present invention the Imc has a pH in the range of 4.5-8, more preferably 5.5-7.7, and most preferably 6.0-7.5.

In other preferred embodiments of the present invention of the Imc has a pH in the range of 4.5-6, more preferably 4.6-5.8, and most preferably 5.0-5.5. The inventors have found that the slightly acidic variants of the Imc give rise to butter-like products having a better shelf-life. Particularly if the slightly acidic pH is combined with the heat-treatment of step b).

pH values mentioned herein are measured at or are normalised to 25 degrees C.

Preferably the MFG contribute with a least 60% w/w of the total fat of the Imc, more preferably at least 70% w/w, even more preferably at least 80% w/w, and most preferably at least 90% w/w of the total fat of the Imc.

It is sometimes preferred that the milk fat globules contribute with substantially all fat of the Imc. This is particularly advantageous in embodiments of the invention wherein no other fat source, e.g. vegetable fat, is to be added for the production of the Imc, or wherein another fat should be added after the shearing of step c).

The Imc typically comprises at most 10% w/w non-fat solids, more preferably at most 7% w/w non-fat solids, even more preferably at most 5% w/w non-fat solids, and most preferably at most 2% w/w non-fat solids.

In the context of the present invention, the term "non-fat solids" refers to the portion of the solids of a composition, e.g. the Imc, that are not fat.

In the context of the present invention, the term "fat" covers lipids in general and e.g. include phospholipids and is measured according to Analysis B.

The inventors have found that it often is beneficial to reduce the content of carbohydrate in the Imc.

The Imc typically comprises at most 10% w/w carbohydrate relative to the Imc, more preferably at most 5% w/w, even more preferably at most 2% w/w, and most preferably at most 1.5% w/w carbohydrate relative to the Imc.

The inventors have seen indications that a low content of carbohydrate in the Imc improves the shelf-life of the resulting butter-like product. Thus, in some preferred embodiments the Imc comprises at most 1.0% w/w carbohydrate relative to the Imc, more preferably at most 0.7% w/w, even more preferably at most 0.2% w/w, and most preferably at most 0.1% w/w carbohydrate relative to the Imc.

The Imc will also typically contain minerals provided by the MFG source(s) and, if used, the one or more additional ingredients.

The inventors have found it beneficial that the MFG of the Imc does not contain fat crystals.

In step a) the Imc preferably has a temperature in the range of 20-65 degrees C, more preferably 30-64 degrees C, even more preferably 40-63 degrees C, and most preferably 50-62 degrees C.

In some preferred embodiments of the invention, the Imc comprises, or even consists of,:
- MFG source having a MFG content in the range of 55-65% w/w in an amount of 85-96% w/w of the Imc
- Sodium chloride in an amount of 0.2-2% w/w of the Imc
- Fermented milk in an amount of 1-4% w/w of the Imc
- Vegetable fat in an amount of 0-10% w/w of the Imc.

Step b) is optional in the sense that some preferred embodiments of the invention do not contain the heat-treatment of step b). However, other preferred embodiments do contain the heat-treatment of step b) which is performed prior to step c).

Therefore, in preferred embodiments of the present invention the method furthermore comprises subjecting the Imc to a heat-treatment in which the Imc is heated to a temperature of at least 66 degrees C.

The heat-treatment of step b) preferably involves heating the Imc to a temperature in the range of 70-160 degrees C, most preferably 85-100 degrees C and preferably holding the Imc in this temperature range for 0.1-600 seconds, most preferably 5-60 seconds.

In some preferred embodiments of the present invention the heat-treatment of step b) involves a UHT treatment wherein the Imc is heated to a temperature in the range of 140-160 degrees C for a duration sufficient to sterilise the Imc. The embodiment is preferably combined with aseptic conditions during the subsequent processing and packaging and gives rise to a sterile, butter-like product having a very long shelf-life.

Step b) may be implemented by direct and/or indirect heating, and may be performed using a plate heat-exchanger, a tubular heat-exchanger, direct steam injection, and/or steam infusion.

Step b) may furthermore contain a cooling step in which heat-treated Imc is cooled to the temperature required during the step c). The is e.g. relevant if the heat-treatment temperature of step b) is higher than the required temperature of step c).

Step c) involves subjecting the Imc obtained from step a) or b) to a shearing step, wherein the temperature of the Imc during the shearing step is in the range of 25-100 degrees C, thereby obtaining a milk fat intermediate.

In some preferred embodiments of the present invention the shearing of step c) is performed using a pressure-based homogenizer and/or a mechanical homogenizer.

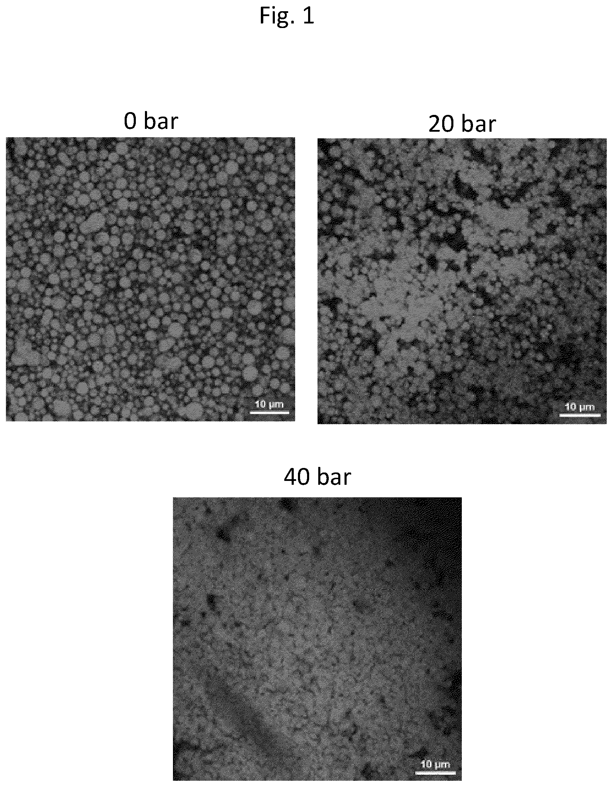

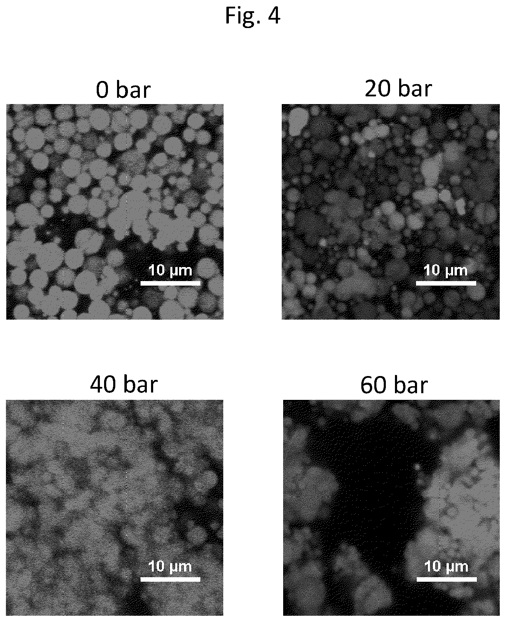

The shearing of step c) is preferably sufficient to cause partial coalescence of the MFG. Partial coalescence of the MFG is easily detected by microscopy (see e.g. Figs. 1 and 4).

Preferably, the duration of the shearing of step c) is sufficient to create a milk fat intermediate having firmness of at least 25 g (grams) at 5 degrees C when determined according to Analysis E, more preferably at least 50 g at 5 degrees C, even more preferably at least 100 g at 5 degrees C, and most preferably at least 200 g at 5 degrees C.

In some preferred embodiments of the present invention, the duration of the shearing of step c) is sufficient to create a milk fat intermediate having a firmness in the range of 25-500 g at 5 degrees C when determined according to Analysis E, more preferably 50-450 g at 5 degrees C, even more preferably 100-400 g at 5 degrees C, and most preferably 200-400 g at 5 degrees C.

In some preferred embodiments of the present invention the temperature of the Imc during the shearing is preferably in the range of 25-100 degrees C, more preferably 30-95 degrees C, even more preferably 40-80 degrees C, and most preferably 50-65 degrees C.

It is sometimes preferred that the MFG of the Imc does not contain fat crystals during the shearing of step c).

However, in other preferred embodiments of the present invention, the temperature of the Imc during the shearing is in the range of 70-100 degrees C, more preferably 75-98 degrees C, even more preferably 80-96 degrees C, and most preferably 85-95 degrees C. The inventors have seen indications that high-temperature shearing provides a better shelf-life of the resulting butter-like product.

In some preferred embodiments of the present invention the shearing of step c) involves the use of a pressure-based homogenizer, preferably operated with a pressure difference in the range of 5-300 bar, more preferably 10-200 bar, even more preferably 15-150 bar and most preferably 20-100 bar. Pressure-based homogenizers operate by forcing the liquid to be homogenized through a small orifice or gap with a high positive pressure acting on the liquid to be homogenized.

The inventors have found that it is possible to increase the firmness of the butter-like product by increasing the pressure of the pressure-based homogenizer.

In other preferred embodiments of the present invention the shearing of step c) involves the use of mechanical homogenizer, e.g. in the form of a rotor-stator type homogenizer, a scraped surface heat exchanger or a high shear mixer.

A benefit of the present invention is that no buttermilk or similar side streams are produces during the shearing step contrary to the traditional butter-making process which results in the production of buttermilk in addition to the butter.

Step d) is optional in the sense that some preferred embodiments of the invention do not contain the addition of further ingredients of step d). However, other preferred embodiments do contain the step d) of combining the milk fat intermediate and one or more further ingredient(s). When included in the method, step d) results in the formation of a mixture which preferably have the same composition as the final butter-like product.

Thus, in some preferred embodiments of the present invention the method furthermore comprises step d) of combining the milk fat intermediate and one or more further ingredient(s).

The milk fat intermediate and one or more further ingredient(s) are typically combined by blending or mixing.

Preferably, the one or more further ingredient(s) comprise one or more of:
- water
- fermented milk product, preferably added in an amount in the range of 1-5% w/w relative to the weight of the mixture, more preferably 1.2-4%, and most preferably in the range of 1.5-3% w/w relative to the weight of the mixture,
- sodium chloride, preferably added in an amount in the range of 0.1-4.5% w/w relative to the weight of the mixture, more preferably 0.5-3.0% w/w, and most preferably 0.8-1.5% w/w relative to the weight of the mixture,
- a flavouring agent, preferably diacetyl,
- a colouring agent,
- a food acceptable preservative, preferably sodium sorbate,
- a polysaccharide hydrocolloid,
- a fat source, preferably vegetable fat and/or a regular butter,
- a food acceptable antioxidant, and
- a vitamin.

In some preferred embodiments of the present invention the milk fat intermediate contributes with at least 50% w/w of the mixture of step d), more preferably at least 60% w/w, even more preferably at least 70% w/w, and most preferably at least 80% w/w of the mixture of step d).

In other preferred embodiments of the present invention the milk fat intermediate contributes with 50-80% w/w of the mixture of step d), more preferably at least 50-75% w/w, even more preferably 50-70% w/w, and most preferably 50-60% w/w of the mixture of step d).

In further preferred embodiments of the present invention the milk fat intermediate contributes with at least 85% w/w of the mixture of step d), more preferably at least 90% w/w, even more preferably at least 95% w/w, and most preferably at least 99% w/w of the mixture of step d).

In further preferred embodiments of the present invention the milk fat intermediate contributes with 80-99.5% w/w of the mixture of step d), more preferably at least 82-99.0% w/w, even more preferably 84-98% w/w, and most preferably 85-97% w/w of the mixture of step d).

In some preferred embodiments of the present invention the milk fat intermediate is used in step d) in an amount sufficient to contribute with at least 50% w/w of the total fat of the mixture resulting from step d), more preferably at least 60% w/w, more preferably at least 70% w/w, and most preferably at least 80% w/w of of the total fat the mixture resulting from step d.

Often the milk fat intermediate is used in step d) in an amount sufficient to contribute with 40-99% w/w of the total fat of the mixture resulting from step d), more preferably 45-90 w/w, more preferably 50-80% w/w, and most preferably 52-70% w/w of the total fat of the mixture resulting from step d).

A substantial part of the fat of the mixture of step d) that is not provided by the milk fat intermediate is typically provided by one or more vegetable fats.

However, in other preferred embodiments of the present invention the milk fat intermediate is used in step d) in an amount sufficient to contribute with at least 99% w/w of the total fat of the mixture resulting from step d) and may even be the only fat source of the mixture.

The milk fat intermediate will typically make up a substantial amount of the mixture resulting from step d).

In some preferred embodiments of the present invention the milk fat intermediate is used in step d) in an amount of at least 50% w/w of the mixture resulting from step d), more preferably at least 60% w/w, more preferably at least 70% w/w, and most preferably at least 80% w/w of the mixture resulting from step d.

Often the milk fat intermediate is used in step d) in an amount of 40-99% w/w of the mixture resulting from step d), more preferably 45-90 w/w, more preferably 50-80% w/w, and most preferably 52-70% w/w of the mixture resulting from step d).

Step d) may be implemented by combining and mixing all ingredients and the milk fat intermediate in a single step or by mixing milk fat intermediate and the ingredients one by one.

The total amount of added sodium chloride, i.e. added as an additional ingredient and/or a further ingredient, is preferably 0-4.5% w/w relative to the weight of the mixture, more preferably 0.5-3.0% w/w, and most preferably 0.8-1.5% w/w relative to the weight of the mixture.

The mixture of step d) preferably has the same chemical composition as the butter-like product.

The total amount of added fermented milk product, i.e. added as an additional ingredient and/or a further ingredient, is preferably the range of 0-5% w/w relative to the weight of the mixture, more preferably 0.5-4%, and most preferably in the range of 1.0-3% w/w relative to the weight of the mixture.

Fermented milk is a preferred fermented milk product.

If used, the total amount of added vegetable fat, i.e. added as an additional ingredient and/or a further ingredient, is preferably the range of 1-30% w/w relative to the weight of the mixture, more preferably 2-25%, and most preferably in the range of 5-20% w/w relative to the weight of the mixture.

The temperature of the product stream during step d) may be in the range of 0-100 degrees C, but is typically in the range of 30-90 degrees C, preferably 35-75 degrees C, more preferably 40-70 degrees C, and most preferably 45-65 degrees C.

However, in some preferred embodiments of the present invention the temperature of the product stream during step d) may be in the range of 60-100 degrees C, more preferably 65-96 degrees C, even more preferably 70-94 degrees C, and most preferably 70-90 degrees C. The inventors have seen indications that high-temperature mixing during step d) provides a better shelf-life of the resulting butter-like product.

The present method may furthermore involve mechanical processing of one or more product stream(s) after step c). For example, step d) may furthermore comprise mechanical processing of the obtained mixture. The mechanical processing may be performed by additional stirring, mixing or working of the mixture.

Step e) is optional in the sense that some preferred embodiments of the invention do not contain the packaging of step e). However, other preferred embodiments do contain the step e) of packaging the butter-like product.

Thus, in some preferred embodiments of the present invention the method of the invention furthermore comprises a packaging step during which the butter-like product is packaged.

The temperature of the product stream during step e) is typically in the range of 0-89 degrees C.

In some preferred embodiments of the present invention the temperature of the product stream during step e) is in the range of 30-90 degrees C, preferably 35-75 degrees C, more preferably 40-70 degrees C, and most preferably 45-65 degrees C.

However, in other preferred embodiments of the present invention, the temperature of the product stream during step e) is in the range of 60-100 degrees C, more preferably 65-96 degrees C, even more preferably 70-94 degrees C, and most preferably 70-90 degrees C. The inventors have seen indications that high-temperature shearing provides a better shelf-life of the resulting butter-like product.

Alternatively, and particularly if cold-filling is preferred, the temperature of the product stream during step e) is in the range of 0-40 degrees C, more preferably 10-40 degrees C, even more preferably 20-40 degrees C, and most preferably 30-40 degrees C.

In some preferred embodiments of the present invention step e) is performed under aseptic conditions which has the benefit of improving the shelf-life of the butter-like product, and to make it feasible to produce a sterile, butter-like product. In some preferred embodiments of the present invention the butter-like product in packaged form is sterile.

In other preferred embodiments of the present invention the method furthermore comprising a cooling step after the shearing of step c), preferably cooling the product-stream to a temperature of at most 10 degrees C, more preferably at most 6 degrees C and most preferably at most 4 degrees C.

Preferably, a cooling step is performed after the packaging of step e).

The method may furthermore comprise a heat-treatment step performed after step c).

The heat-treatment performed after step c) preferably involves heating the product stream to a temperature in the range of 70-160 degrees C, most preferably 85-95 degrees C and preferably holding the product stream in this temperature range for 1-600 seconds, more preferably 5-60 seconds.

In some preferred embodiments of the present invention the heat-treatment performed after step c) involves a UHT treatment wherein the Imc is heated to a temperature in the range of 140-160 degrees C for a duration sufficient to sterilise the product stream. This embodiment can advantageously be combined with aseptic conditions during the subsequent processing and packaging and gives rise to a sterile, butter-like product having a very long shelf-life.

In the context of the present invention the term "product stream" pertains to the composition that is subjected to the process in question; the term is used when a process step may be applied during difference stage of the process, e.g. on the final product or an intermediary product. The term product stream does not imply that the method is implemented as a continuous process.

Embodiments and preferences described in the context of the heat-treatment of step b) equally apply to the heat-treatment which may be implemented after step c).

In some preferred embodiments of the present invention the present method is implemented as a continuous process and it is an advantage of the method that it is suitable for continuous processing.

In other preferred embodiments of the present invention the present method is implemented as a batch or semi-batch method.

In some particularly preferred embodiments of the invention the method comprising the steps of:
a) providing a liquid, milk fat globule composition (Imc), preferably having a temperature in the range of 20-65 degrees C,
   the Imc comprising:
      i) milk fat globules (MFG) in an amount of 50-85% w/w of the Imc,
      ii) 1.5-15% w/w micellar casein relative to the weight of the water content of the Imc,
      iii) water in an amount of 10-49% w/w, and
      iv) optionally, one or more additional component(s),
   the Imc comprises, and is prepared by mixing:
      - MFG source having a MFG content in the range of 55-65% w/w in an amount of 85-96% w/w of the Imc,
      - sodium chloride in an amount of 0.2-2% w/w of the Imc
      - fermented milk in an amount of 1-4% w/w of the Imc
      - vegetable fat in an amount of 0-10% w/w of the Imc.
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
e) optionally, packaging the butter-like product which is the milk intermediate obtained from step c).

Preferred butter-like products of the invention are obtainable by the particularly preferred method embodiments described above.

In other particularly preferred embodiments of the invention the method comprising the steps of:
a) providing a liquid, milk fat globule composition (Imc), preferably having a temperature in the range of 20-65 degrees C,
   the Imc comprising:
      i) milk fat globules (MFG) in an amount of 50-85% w/w of the Imc,
      ii) 1.5-15% w/w micellar casein relative to the weight of the water content of the Imc,
      iii) water in an amount of 10-49% w/w, and
      iv) optionally, one or more additional component(s),
   the Imc comprises, and is prepared by mixing:
      - MFG source having a MFG content in the range of 55-65% w/w in an amount of 94-98% w/w of the Imc,
      - sodium chloride in an amount of 0.2-2% w/w of the Imc,
      - fermented milk in an amount of 1-4% w/w of the Imc,
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) combining the milk fat intermediate the final mixture and one or more further ingredient(s) comprising vegetable fat, wherein the milk fat intermediate is used in an amount of 80-95% w/w of the final mixture and vegetable is used in an amount of 2-20
e) optionally, packaging the butter-like product which is the final mixture of step d).

Preferred butter-like products of the invention are obtainable by the particularly preferred method embodiments described above.

In further particularly preferred embodiments of the invention the method comprising the steps of:
a) providing a liquid, milk fat globule composition (Imc), preferably having a temperature in the range of 20-65 degrees C,
   the Imc comprising:
      i) milk fat globules (MFG) in an amount of 50-85% w/w of the Imc,
      ii) 1.5-15% w/w micellar casein relative to the weight of the water content of the Imc,
      iii) water in an amount of 10-49% w/w, and
      iv) optionally, one or more additional component(s),
   the Imc comprises one or more MFG source having a MFG content in the range of 55-65% w/w in an amount of at least 95% w/w of the Imc,
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) combining the milk fat intermediate the final mixture and one or more further ingredient(s) comprising vegetable fat, sodium chloride, and fermented milk, wherein the milk fat intermediate is used in an amount of 80-95% w/w of the final mixture, vegetable fat is used in an amount of 2-15% w/w of the final mixture, sodium chloride is used in an amount of 0.2-2% w/w of the final mixture, and fermented milk is used in an amount of 1-4% w/w of the Imc,
e) optionally, packaging the butter-like product which is the final mixture obtained from step d).

Preferred butter-like products of the invention are obtainable by the particularly preferred method embodiments described above.

In some particularly preferred embodiments of the invention the method comprising the steps of:
a) providing a liquid, milk fat globule composition (Imc), preferably having a temperature in the range of 20-65 degrees C,
   the Imc comprising:
   i) milk fat globules (MFG) in an amount of 50-85% w/w of the Imc,
   ii) 1.5-15% w/w micellar casein relative to the weight of the water content of the Imc,
   iii) water in an amount of 10-49% w/w, and
   iv) optionally, one or more additional component(s),
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
e) optionally, packaging the butter-like product which is the milk intermediate obtained from step c).

Preferred butter-like products of the invention are obtainable by the particularly preferred method embodiments described above.

In other particularly preferred embodiments of the invention the method comprising the steps of:
a) providing a liquid, milk fat globule composition (Imc), preferably having a temperature in the range of 20-65 degrees C,
   the Imc comprising:
   i) milk fat globules (MFG) in an amount of 50-85% w/w of the Imc,
   ii) 1.5-15% w/w micellar casein relative to the weight of the water content of the Imc,
   iii) water in an amount of 10-49% w/w, and
   iv) optionally, one or more additional component(s),
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) combining the milk fat intermediate the final mixture and one or more further ingredient(s) comprising vegetable fat, wherein the milk fat intermediate is used in an amount of 50-95% w/w of the final mixture,
e) optionally, packaging the butter-like product, which is the final mixture of step d).

Preferred butter-like products of the invention are obtainable by the particularly preferred method embodiments described above.

In further particularly preferred embodiments of the invention the method comprising the steps of:
a) providing a liquid, milk fat globule composition (Imc), preferably having a temperature in the range of 20-65 degrees C,
   the Imc comprising:
   i) milk fat globules (MFG) in an amount of 50-85% w/w of the Imc,
   ii) 1.5-15% w/w micellar casein relative to the weight of the water content of the Imc,
   iii) water in an amount of 10-49% w/w, and
   iv) optionally, one or more additional component(s),
b) optionally, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) combining the milk fat intermediate the final mixture and one or more further ingredient(s) comprising vegetable fat, sodium chloride, and fermented milk, wherein the milk fat intermediate is used in an amount of 80-95% w/w of the final mixture,
e) optionally, packaging the butter-like product, which is the final mixture obtained from step d).

Preferred butter-like products of the invention are obtainable by the particularly preferred method embodiments described above.

Yet an aspect of the invention pertains to the butter-like product obtainable by the method defined herein.

The butter-like product contains at least 50% w/w fat relative to its total weight and at least 50% w/w milk fat relative to the total amount of fat.

In some preferred embodiments of the present invention the butter-like product comprises:
- total fat in an amount in the range of 50-85% w/w, and preferably in the range of 60-85% w/w,
- water in an amount in the range of 10-48% w/w, and preferably in the range of 10-39% w/w
- total protein in an amount in the range of 0.1-5% w/w,
and has a pH in the range of 4.5-8.

In the present invention the milk fat intermediate is used in an amount sufficient to provide at least 50% w/w of the total fat of the butter-like product, more preferably at least 60% w/w, even more preferably at least 70% w/w, and most preferably at least 80% w/w of the total fat of the butter-like product.

In other preferred embodiments of the present invention the milk fat intermediate is used in an amount sufficient to provide 50-80% w/w of the total fat of the butter-like product, more preferably at least 21-50% w/w, even more preferably 50-70% w/w, and most preferably 50-60% w/w of the total fat of the butter-like product.

In further preferred embodiments of the present invention the milk fat intermediate is used in an amount sufficient to provide at least 85% w/w of the total fat of the butter-like product, more preferably at least 90% w/w, even more preferably at least 95% w/w, and most preferably at least 99% w/w of the total fat of the butter-like product.

In some preferred embodiments of the present invention the milk fat intermediate contributes with at least 50% w/w of the butter-like product, more preferably at least 60% w/w, even more preferably at least 70% w/w, and most preferably at least 80% w/w of the butter-like product. In other preferred embodiments of the present invention the milk fat intermediate contributes with 50-80% w/w of the butter-like product, more preferably at least 50-75% w/w, even more preferably 50-70% w/w, and most preferably 50-60% w/w of the butter-like product.

In further preferred embodiments of the present invention the milk fat intermediate contributes with at least 85% w/w of the butter-like product, more preferably at least 90% w/w, even more preferably at least 95% w/w, and most preferably at least 99% w/w of the butter-like product. In further preferred embodiments of the present invention the milk fat intermediate contributes with 80-99.5% w/w of the butter-like product, more preferably at least 82-99.0% w/w, even more preferably 84-98% w/w, and most preferably 85-97% w/w of the butter-like product.

In some preferred embodiments of the invention the milk fat intermediate obtained from step c) is the butter-like product. These embodiments are particularly relevant for methods that do not contain step d) and wherein milk fat intermediate the packaged, optionally following one or more of a pasteurisation step, a cooling step, and a mechanically processing step.

The butter-like product preferably comprises total protein in an amount in the range of 0.1-5% w/w, more preferably 0.2-4% w/w, even more preferably 0.4-3% w/w, and most preferably 0.5-2% w/w.

In other preferred embodiments of the present invention the butter-like product comprises total protein in an amount in the range of 0.1-2% w/w, more preferably 0.1-1.5% w/w, even more preferably 0.1-1.0% w/w, and most preferably 0.1-2% w/w.

The butter-like product typically has a weight ratio between casein and whey protein of 70:30-99:1, more preferably 80:20-98:2, even more preferably 85:15-98:2, and most preferably 90:10-98:2.

The butter-like product typically comprises total fat in an amount in the range of 50-90% w/w, more preferably 55-85% w/w, even more preferably 60-84% w/w, and most preferably 80-84% w/w.

In some preferred embodiments of the present invention the butter-like product comprises total fat in an amount in the range of 50-75% w/w, more preferably 50-72% w/w, even more preferably 50-70% w/w, and most preferably 50-65% w/w. These embodiments are preferred if low fat butter-like products are required.

The butter-like product typically comprises carbohydrate in an amount in the range of 0-10% w/w, more preferably 0-8% w/w, even more preferably 0-6% w/w, and most preferably 0-5% w/w.

The butter-like product may for example comprises carbohydrate in an amount in the range of 0.1-10% w/w, more preferably 0.2-8% w/w, even more preferably 0.3-6% w/w, and most preferably 0.4-5% w/w.

The pH of the butter-like product is typically in the near-neutral to slightly acidic pH range.

In some preferred embodiments of the present invention the butter-like product has a pH in the range of 4.5-8, more preferably 5.5-7.7, and most preferably 6.0-7.5.

In other preferred embodiments of the present invention of the butter-like product has a pH in the range of 4.5-6, more preferably 4.6-5.8, and most preferably 5.0-5.5. The inventors have found that the slightly acidic variants of the butter-like product give rise to a better shelf-life.

The butter-like product typically comprises at most 10% w/w non-fat solids, more preferably at most 7% w/w non-fat solids, even more preferably at most 5% w/w non-fat solids, and most preferably at most 2% w/w non-fat solids.

In some preferred embodiments of the present invention the butter-like product comprises:
- the milk fat intermediate in an amount in the range of 50-100% w/w,
- total fat in an amount in the range of 50-85% w/w, and preferably in the range of 60-85% w/w,
- water in an amount in the range of 10-48% w/w, and preferably in the range of 10-39% w/w
- total protein in an amount in the range of 0.1-5% w/w,
and the butter-like product preferably has a pH in the range of 4.5-7.5.

Yet an aspect of the invention pertains to the use of the butter-like product as an ingredient in the production of a food product, preferably wherein the butter-like product is used in amount to provide at least 5% w/w of the fat of the food product, more preferably at least 10% w/w, even more preferably at least 15% w/w, and most preferably at least 20% w/w.

### EXAMPLES

### Methods of analysis

### Analysis A: Total protein

The concentration of protein of a composition was determined by Kjeldahl method (ISO 8968-1:2014/IDF 20) with a conversion factor of 6.25.

### Analysis B: Total fat and dry matter (total solids)

The total fat and dry matter contents of a composition was evaluated using MilkoScanTM FT1 (Foss Electric, Hillerød, Denmark) and Smart System 5^{™} (CEM, Matthews, U.S.A).

### Analysis C: Particle size distribution

The particle size distribution of a composition was determined using a Malvern Mastersizer 3000 (Malvern Instruments Ltd., Malvern, UK). The sample was added until an obscuration rate of 10-20 % and the refractive indices for milk fat and water were 1.458 and 1.330, respectively. The D[4,3], Dv10, Dv50, and Dv90 values were calculated by the Malvern software and used to interpret the droplet size distribution.

### Analysis D: Microstructure

The microstructure of the cream and concentrated creams was analysed using a Nikon C2 Confocal Laser Scanning Microscope (Nikon Instrument Inc, Tokyo, Japan) with a 100x objective lens. Nile red and Fluorescein isothiocyanate (FITC were used as the fluorescence stain agents for fats and proteins, respectively. Between 5 and 10 pictures were obtained for each sample to get a representative result. The creams after storage at 5 °C were labelled with Nile Red and FITC both dissolved in acetone to a final concentration of 0.001 %.

### Analysis E: Firmness

Product firmness was measured at 5 degrees C on a Texture Analyser (TA XT plus) one week after production. A cone (probe) having a 60 degree angle was pressed 8 mm into the undisturbed product. The trigger force was 5.0 g and the test speed was 49.8 mm per min. As the probe enters the sample, the force increases with the distance and the resistance to deformation by the applied stress is measured. The firmness (measured in gram) of the sample is the value of the maximum force applied to the sample over a specified distance (i.e. 8 mm).

### Analysis F: Proteins in the permeate samples

The protein in the permeate samples was dissolved in a reduction buffer by reduction of disulphide bonds (S-S) using DTE and extraction of hydrophobic bonds with urea. 200 µl of sample was added to an eppendorf tube. 1 ml of reduction buffer (100 mM trisodium citrate; 6 M Urea) and 20 µl of 1 M DTE was added. Samples were mixed and incubated for 60 min at 37°C. After incubation, the samples are centrifuged at 13,600xg for 10 min at 5 degrees C. 200 µl of the supernatant was transferred to a vial and analysed using LC- TOF (Agilient Technologies 1290). Parameters used for LC-TOF analysis is listed below.

| | |
|---|---|
| **System** | **Agilent Technologies 1290** |
| **Method** | 190409_ poroshell TP_ 8uPMI.m |
| **Column** | Poroshell 120 SB-C18 2.1x150mm 2.7 Micron + Guard Column (Agilent) |
| **Column Temperature** | 40 °C |
| **Mobil phase A** | 0.1% TFA in water |
| **Mobil phase B** | 0.1% TFA in MeCN |
| **Gradient** | 0 - 34 % B from 0 -10 min and 34- 47 % B from 10 - 28 min |
| **Flow** | 0.35 ml/min |
| **Injection volume** | 8 µl |
| **UV Wavelength** | 214 nm |
| **TOF-Settings** | Signal: Positive |
| | Time segment: 2.8 - 26 min |
| | Signal mode: Profile and Centroid |
| | Mass range: 100 - 3200 m/z |
| | Gas temperature: 325 °C |
| | Gas flow: 10 I/min |
| | Sheath gas temperature: 300 °C |
| | Sheath gas flow: 7 L/min |
| | Nebulizer pressure: 35 psi |
| | Nozzle energy: 500 V |
| | Vcap: 3500 V |
| | : 200 V |

### Example 1: Preparation of concentrated cream with microfiltration

### Materials and methods:

### Materials:

Raw milk was heated to 50 degrees C and separated into cream and skim milk fractions by centrifugation. The cream containing approx. 40 % fat was pasteurized (72 degrees C for 15 seconds) and cooled down to 10 degrees C for storage for microfiltration experiments.

### Process:

150 Kg of pasteurized cream was microfiltered using pilot filtration unit equipped with 7 element ceramic membranes (with nominal pore size of 450 nm, 1020 mm length, 23 channels, 3.5 mm channel diameter, 0.3 m2 surface area/element). Prior to the filtration experiment, the cream was heated to approximately 55 degrees C and concentrated by filtration. The concentrate was diluted to fat content of 60% using RO water and pasteurised (93 degrees C for 15 seconds) and cooled down to 45 degrees C. The pasteurised concentrated cream was then homogenised using single-stage homogenisation (APV Homogeniser Pilot 4T) at different pressures (0-200 bars).

### Characterisation:

The cream (raw material), the concentrated cream prepared by microfiltration, and homogenised samples were characterised with respect to chemical composition, microstructure and firmness as discussed in the previous section (Methods of Analysis).

### Results:

The composition of the samples before, after concentration by MF and standardisation by RO water is listed below in table 1. The standardised samples with approximately 60-62% (w/w) fat and 3.25% (w/w) proteins were pasteurised and homogenised at different pressure. The casein to whey proteins ratio was calculated to be 83:17 where most (assumed to be 100%) of the caseins were in the micellar form. The samples without homogenisation (0 bar) had intact spherical fat globules. At 20 bar, the globule size were slightly smaller and a partial coalescence of fat globules were observed (figure 1) while at 40 bar, extensive coalescence of fat globules were observed.

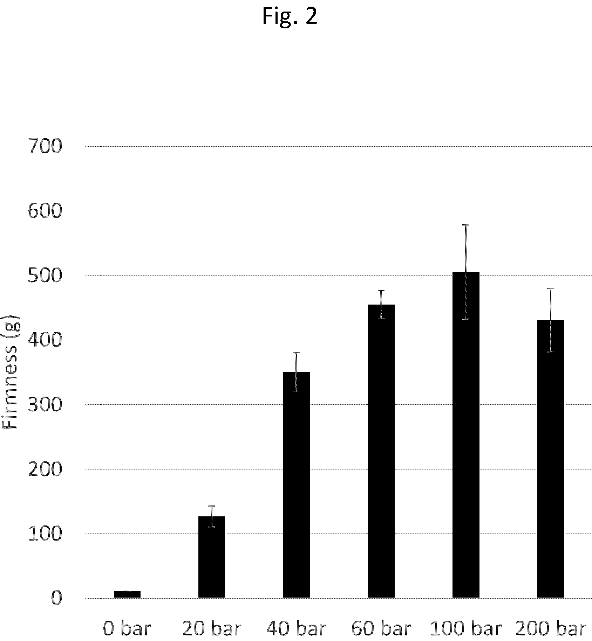

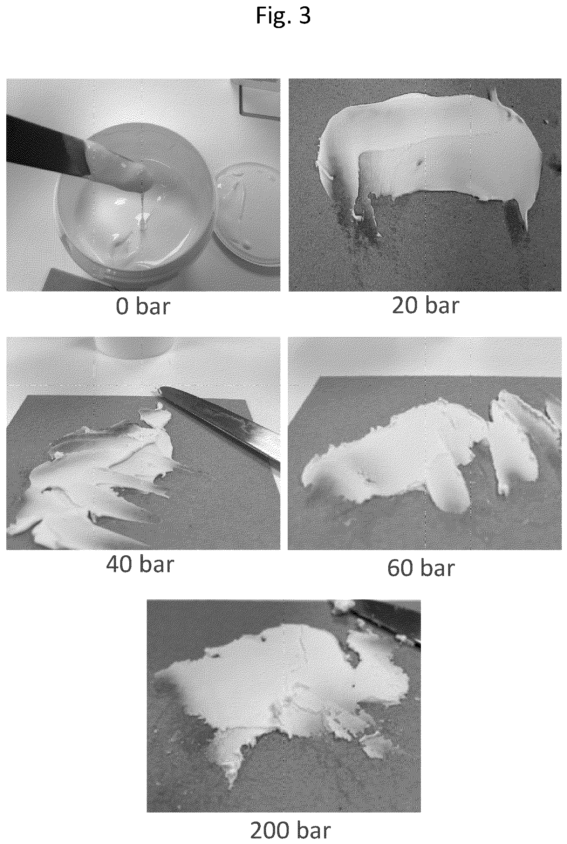

Furthermore, the firmness (figure 2) of the homogenised samples after cold storage (5 degrees C) for at least 7 days showed an interesting functionality (firmness and spreadability). The firmness was found to increase linearly with an increase in homogenisation pressure from 0 to 60 bars. The firmness values reached a plateau at the homogenisation pressure of more than 60 bars. The unhomogenised sample was still in the liquid state while the homogenised samples had butter-like texture which were easily spreadable using butter knife even though the product was perceived harder and gave a bit of gummy texture with increasing the homogenisation pressure as confirmed by the firmness measurement (figure 3). Homogenisation process seems to affect the protein-fat interaction giving a surprising effect on structure and functionality.

**Table 1: Composition of cream before and after concentration by microfiltration and standardisation with RO water.**

| | Composition (%, w/w) | | | |
|---|---|---|---|---|
| Samples | Fat | Protein (casein:whey protein)¹ | Dry matter | Micellar casein of total water² |
| Cream before concentration | 37.97 | 2.49 (80:20) | 44.23 | 3.57 |
| Cream after concentration by MF | 70.22 | 3.81 (83:17) | 74.58 | 12.44 |
| Standardised cream before homogenization | 61.94 | 3.25 (83:17) | 65.36 | 7.79 |

| | | | | |
|---|---|---|---|---|
| ¹ Casein to whey protein ratio in the final product calculated based on the composition of proteins in the feed before microfiltration and permeate after microfiltration. ² Calculated assuming that nearly 100% of the casein is in micellar form at 45 degrees C. | | | | |

### Example 2: Preparation of concentrated cream by microfiltration and diafiltration

In the experiment, the inventors prepared samples of concentrated cream by microfiltration followed by diafiltration with RO water.

### Materials and methods:

### Materials:

Raw milk was heated to 50 degrees C and separated into cream and skim milk fractions by centrifugation. The cream containing approx. 40% fat was pasteurized (72 degrees C for 15 seconds) and cooled down to 10 degrees C for storage for microfiltration experiments.

### Process:

80 Kg of pasteurized cream was microfiltered using pilot filtration unit equipped with 7 element ceramic membranes (with nominal pore size of 450 nm, 1020 mm length, 23 channels, 3.5 mm channel diameter, 0.3 m2 surface area/element). Prior to the filtration experiment, the cream was heated to approximately 55 degrees C and concentrated by filtration. Diafiltration was carried out by adding RO water which was about 3 times of the volume of the retentate (concentrated cream) and concentrated until the fat content of reached to 67-68%. The concentrate was diluted to fat content of approximately 60% using RO water and pasteurised (93 degrees C for 15 seconds) and cooled down to 45 degrees C. The pasteurised concentrated cream was then homogenised using single-stage homogenisation (APV Homogeniser Pilot 4T) at different pressures (0-200 bars).

### Characterisation:

The cream (raw material), the concentrated cream prepared by microfiltration & diafiltration, the microfiltration permeate, were characterised with respect to chemical composition, microstructure and firmness as discussed in the previous section (Methods of Analysis).

### Results:

The composition of the samples before and after concentration by, MF and standardisation by RO water is listed in table 2. The standardised samples with approximately 58-60% (w/w) fat and 2,23% (w/w) proteins were pasteurised and homogenised at different pressure. The samples without homogenisation (0 bar) had intact and spherical fat globules (figure 4). For the samples treated at 20 bar, the size of fat globules were slightly smaller and a partial coalescence of fat globules were observed and samples treated at pressure 40 bar or above, extensive coalescence of fat globules were observed.

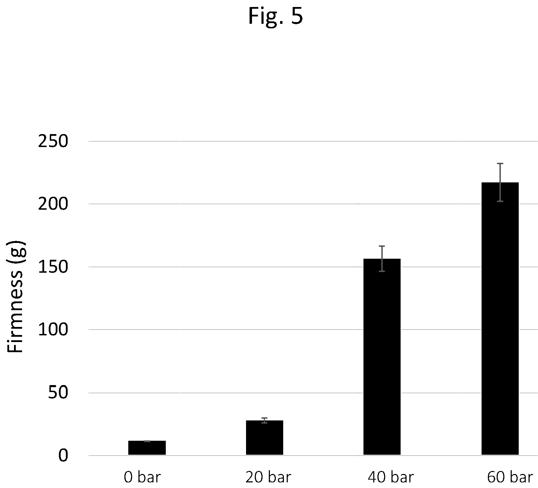

Furthermore, the firmness (figure 5) of the homogenised samples after cold storage (5 degrees C) for at least 7 days showed an interesting functionality (firmness and spreadability) similar to that of example 1. The firmness increased linearly with an increase in homogenisation pressure from 0 to 60 bars. The unhomogenised sample remained in the liquid state while the homogenised samples had butter-like texture which were easily spreadable. Even though the texture was acceptable in terms of spreadability, the samples had lower firmness compared to the samples from the example 1. The reduced values firmness of these samples are correlated with the lower content of micellar casein in the sample. Homogenisation process seems to affect the protein-fat interaction giving a surprising effect on structure and functionality. Homogenisation (mechanical shear) damages of milk fat globule membrane so the proteins especially caseins to be adsorbed on the surface. In addition, with the decrease in the fat globule size due to homogenization, the micellar caseins could act as inert fillers thus increasing the viscosity.

The permeate samples during microfiltration contained only a small amount of proteins i.e. 0.32% (w/v) during microfiltration and 0.16% (w/v) during diafiltration. In addition, the majority of proteins present in the permeate were whey proteins. It means that, most of the micellar caseins were present in the concentrate (concentrated cream). Therefore the surprising product functionality observed could most probably due to the structure development through micellar casein-fat interactions.

**Table 2: Composition of cream before and after concentration by microfiltration, diafiltration and standardization.**

| Samples | Composition (%, w/w) | | | |
|---|---|---|---|---|
| | Fat | Protein (casein:whey protein)¹ | Dry matter | Micellar casein of total water² |
| Cream before concentration | 37.60 | 2.41 (80:20) | 43.46 | 3.41 |
| Cream after concentration by MF | 66.99 | 3.51 (84:16) | 71.94 | 10.51 |
| Standardised cream before homogenization | 58.71 | 2.23 (84:16) | 60.99 | 4.80 |

| | | | | |
|---|---|---|---|---|
| ¹ Casein to whey protein ratio in the final product calculated based on the composition of proteins in the feed before microfiltration and permeate after microfiltration. ² Calculated assuming that nearly 100% of the casein is in micellar form at 45 degrees C. | | | | |

### Example 3: Preparation of concentrated cream by microfiltration and diafiltration from cream (feed) treated with sodium citrate

In the experiment, the inventors prepared samples of concentrated cream by microfiltration of the cream that was treated with sodium citrate followed by diafiltration with RO water. Sodium citrate was added to the cream prior to filtration to disintegrate the casein micelles into individual proteins. This experiment was conducted to determine the role of micellar caseins on the formation of structure during homogenisation.

### Materials and methods:

### Materials:

Raw milk was heated to 50 degrees C and separated into cream and skim milk fractions by centrifugation. The cream containing approx. 40% fat was pasteurized (72 degrees C for 15 seconds) and cooled down to 10 degrees C for storage for washing and microfiltration experiments.

### Process:

80 Kg of pasteurized cream was treated with sodium citrate (0,77% w/w) overnight. Next day, the cream was microfiltered using pilot filtration unit equipped with 7 element ceramic membranes (with nominal pore size of 450 nm, 1020 mm length, 23 channels, 3.5 mm channel diameter, 0.3 m2 surface area/element). Prior to the filtration experiment, the cream was heated to approximately 55 degrees C and concentrated by filtration. Diafiltration was carried out by adding RO water which was about 3 times of the volume of the retentate (concentrated cream) and concentrated until the fat content of reached to 64-68%. The concentrate was diluted to fat content of approximately 60% using RO water and pasteurised (93 degrees C for 15 seconds) and cooled down to 45 degrees C. The pasteurised concentrated cream was then homogenised using single-stage homogenisation (APV Homogeniser Pilot 4T) at different pressures (0-60 bars).

### Characterisation:

The cream (raw material), the concentrated cream prepared by microfiltration & diafiltration, and homogenised samples were characterised with respect to chemical composition, microstructure and firmness as discussed in the previous section (Methods of Analysis).

### Results:

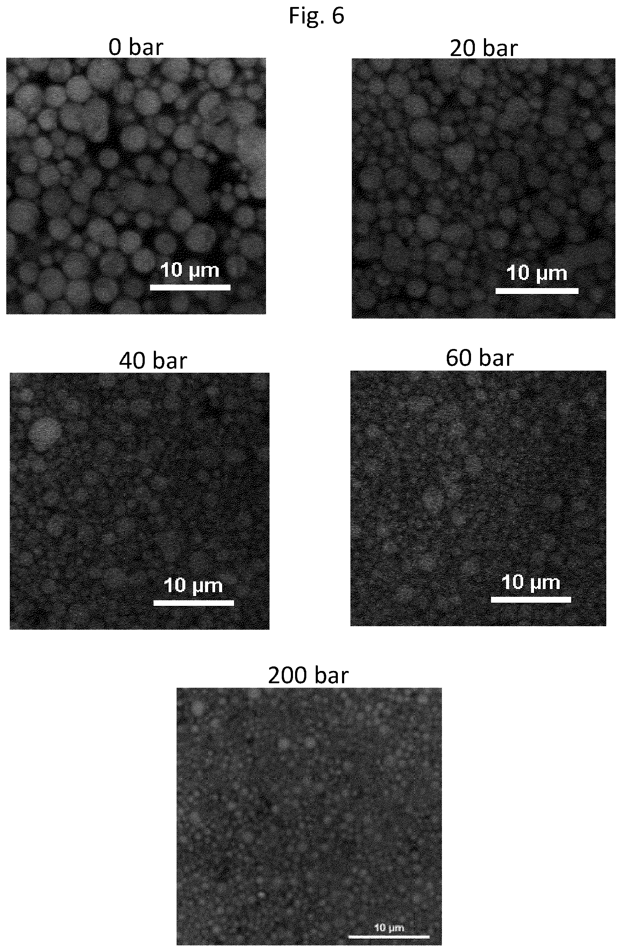

The composition of the samples before and after concentration by microfiltration and standardisation by RO water is listed in table 3. The standardised samples had approximately 63% (w/w) fat and 2,91% (w/w) proteins and were pasteurised and homogenised at different pressure. As shown by the confocal micrographs (figure 6), the size of the fat globules decreased as the fat globules with the increase in the homogenisation pressure. Unlike in the examples 1 and 2, no coalescence of fat globules were observed.

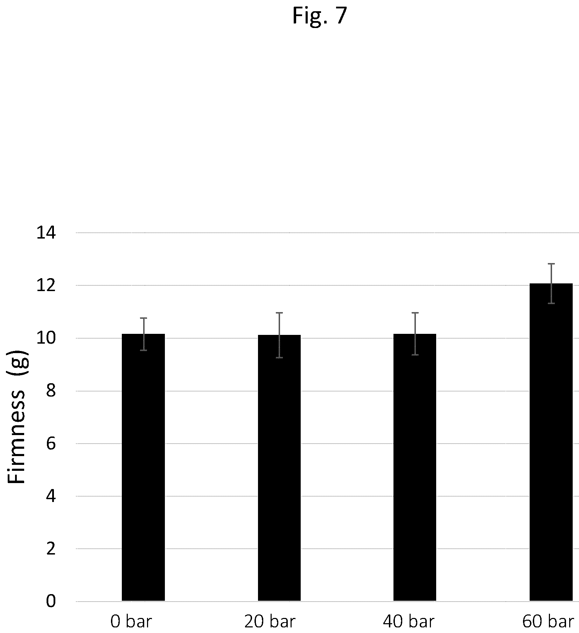

In addition, the product after homogenisation remained quite stable and in soft (liquid) state after cooling to 5 degrees C. The firmness (figure 7) was also very low, comparable to the samples without homogenisation in examples 1 and 2, and did not increase with increase in the homogenisation pressure. From this results, it could be concluded that the individual casein proteins formed as a results of adding sodium citrate act more as a emulsifying agent covering and stabilising small fat globules formed by the homogenisation process. In other experiments with similar conditions the homogenisation pressure was increased up to 200 bars, and no visible difference in terms of texture, viscosity and microstructure was observed.

During microfiltration process, the permeate contained slightly higher concentration of proteins i.e. 0.44 % (w/v) during microfiltration and 0.25 % (w/v) during diafiltration. The higher concentration in the permeate is due to the presence of more caseins. Some of the individual caseins generated due to the addition of sodium citrate could permeate through the membrane (observed by chromatographic analysis of the permeate).

**Table 3: Composition of cream before and after concentration by microfiltration and diafiltration and standardization. The feed cream was treated with sodium citrate before microfiltration.**

| Samples | Composition (%, w/w) | | | |
|---|---|---|---|---|
| | Fat | Protein (casein:whey protein)¹ | Dry matter | Micellar casein of total water² |
| Cream before concentration | 39.81 | 2.48 (80:20) | 45.88 | 3.67 |
| Cream after concentration by MF | 65.77 | 2.94 (93:7) | 69.76 | Low ³ |
| Standardised cream before homogenization | 63.36 | 2.91 (93:7*) | 65.68 | Low ³ |

| | | | | |
|---|---|---|---|---|
| ¹ Casein to whey protein ratio in the final product calculated based on the composition of proteins in the feed before microfiltration and permeate after microfiltration. ² Calculated assuming that nearly 100% of the casein is in micellar form at 45 degrees C. ³ The precise content of micellar casein was not determined but must have been very low due to the addition of sodium citrate in amounts known to disintegrate micellar casein. | | | | |

### Example 4: Preparation of concentrated cream by microfiltration from washed cream

In the experiment, the inventors prepared samples of concentrated cream by microfiltration of pre-washed cream to reduce the level of micellar caseins in the final product. The cream (containing 38 % fat) was mixed with RO water (9 times the volume of cream) and the fat phase separated by centrifugation. The washed cream was concentrated by microfiltration and standardised to lower the fat content and increase the protein level with sodium caseinate and whey protein isolate. To standardise fat content, 1) 7 Kg of RO water was added to 30 Kg of concentrated cream; 2) 7 Kg of sodium caseinate solution (8.7% protein concentration) was added to 30 Kg of concentrated cream; and 3) 7 Kg of whey protein solution (2.2 % protein concentration) was added to 30 Kg of concentrated cream. This experiment was conducted to determine the role of individual casein and whey proteins on the formation of structure during homogenisation.

### Materials and methods:

### Materials:

Raw milk was heated to 50 degrees C and separated into cream and skim milk fractions by centrifugation. The cream containing approx. 40% fat was pasteurized (72 degrees C for 15 seconds) and cooled down to 10 degrees C for storage for microfiltration experiments. A 4050 Kg of RO water was added to 450 Kg of cream and cream was separated again by centrifugation.

### Process:

200 Kg of pasteurized washed-cream was microfiltered using pilot filtration unit equipped with 7 element ceramic membranes (with nominal pore size of 450 nm, 1020 mm length, 23 channels, 3.5 mm channel diameter, 0.3 m2 surface area/element). Prior to the filtration experiment, the cream was heated to approximately 55 degrees C and concentrated by filtration. Three different samples were prepared, 1) concentrate was diluted to fat content of approximately 60% using RO water, 2) concentrate was standardised to fat content of approximately 60% fat using RO water and sodium caseinate solution, and 3) and concentrate was standardised to fat content of approximately 60% fat using RO water and whey protein solution. All the samples were pasteurised (93 degrees C for 15 seconds) and cooled down to 45 degrees C. The pasteurised concentrated cream was then homogenised using single-stage homogenisation (APV Homogeniser Pilot 4T) at different pressures (0-150 bars).

### Characterisation:

The cream (raw material), washed cream, concentrated cream prepared by microfiltration and homogenised samples were characterised with respect to chemical composition, microstructure and firmness as discussed in the previous section (Methods of Analysis).

### Results:

The composition of the samples before and after washing, concentration by microfiltration and standardisation by RO water is listed in table 4. The washing step decreased the protein level quite significantly to 0.3 % (w/w). The fat content of the standardised samples before pasteurisation and homogenisation was between 59 to 60%. The protein content of the standardised sample was 0.38% (w/w) which was then increased to 1.88% by sodium caseinate addition and to 0.66% by adding whey protein isolate solution.

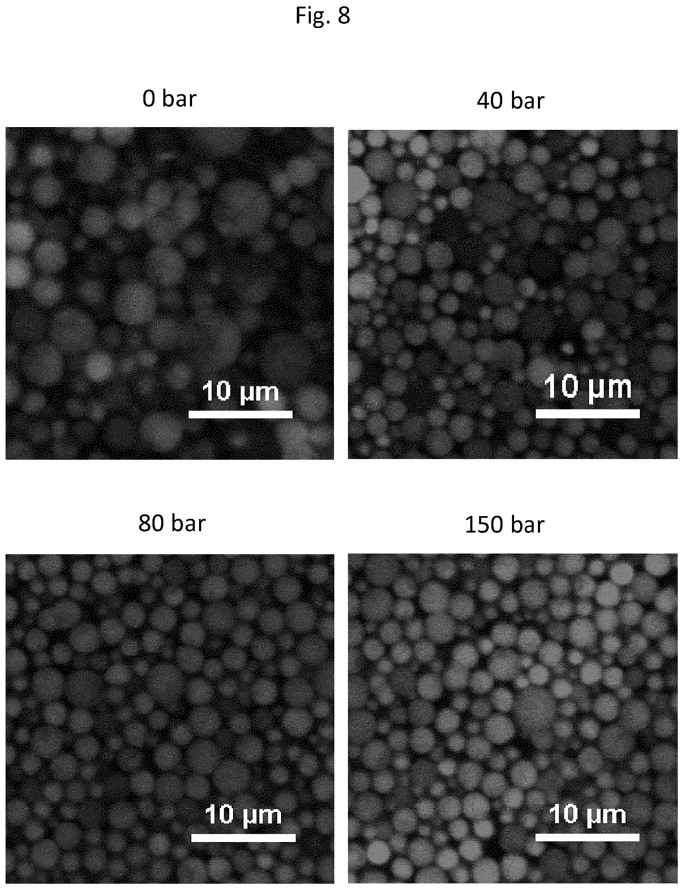

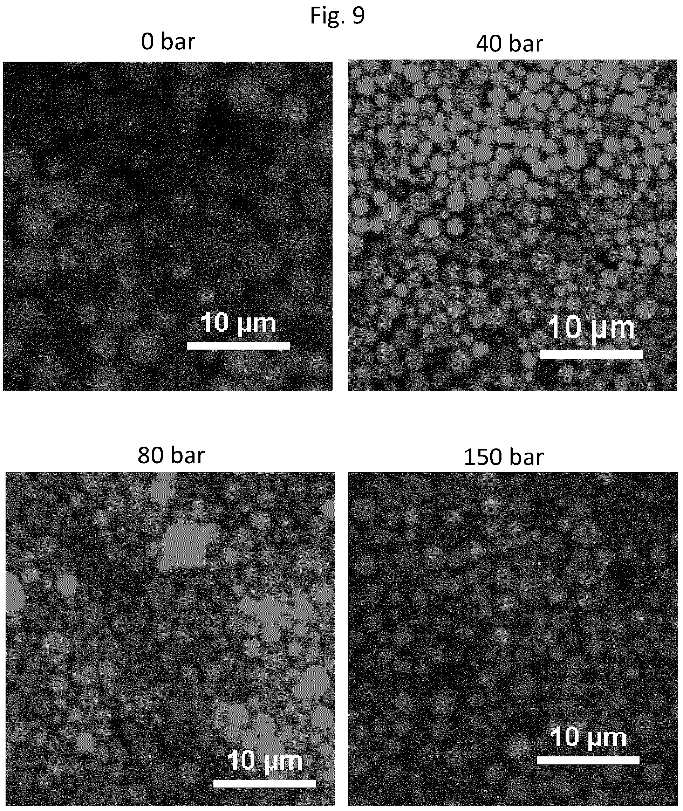

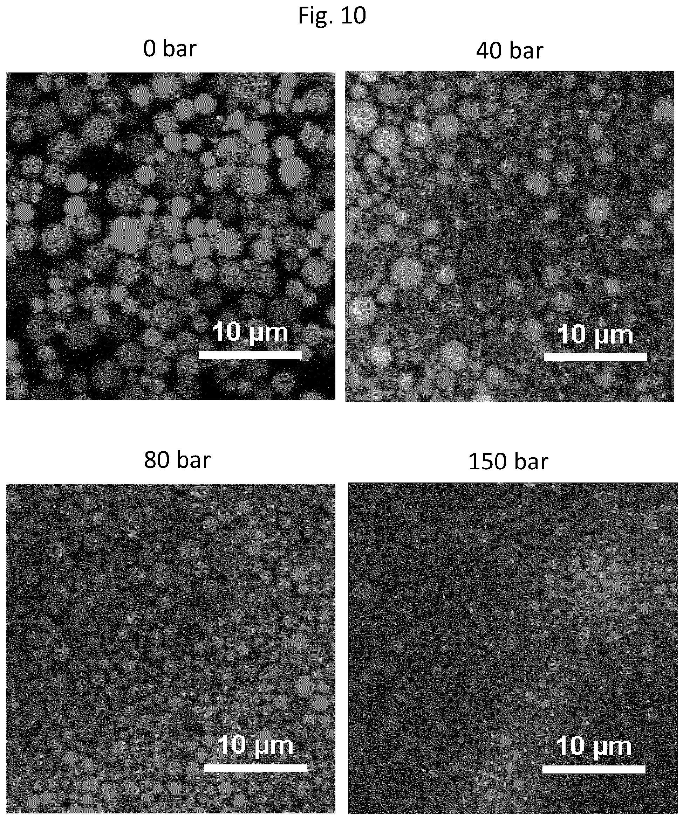

The confocal micrographs (figure 8) of the homogenised samples without added proteins slightly smaller sized fat globules after homogenisation (40 bar). Above 40 bars, there was no visible effect of homogenisation on the size of the fat globules. The homogenised samples with added whey proteins had fat globules slightly smaller than without proteins (figure 9). Again, the effect of the increase in homogenisation pressure was not visible as the fat globules size remained more or less same from 40 to 150 bars. The fat globule structure of the unhomogenised samples (0 bar) in all three samples were comparable. The confocal micrographs (figure 10) for the samples with added sodium caseinate showed quite an interesting results. The size of fat globules decreased as a function of increasing the homogenisation pressure from 0 to 150 bars and no coalescence of fat globules was observed.

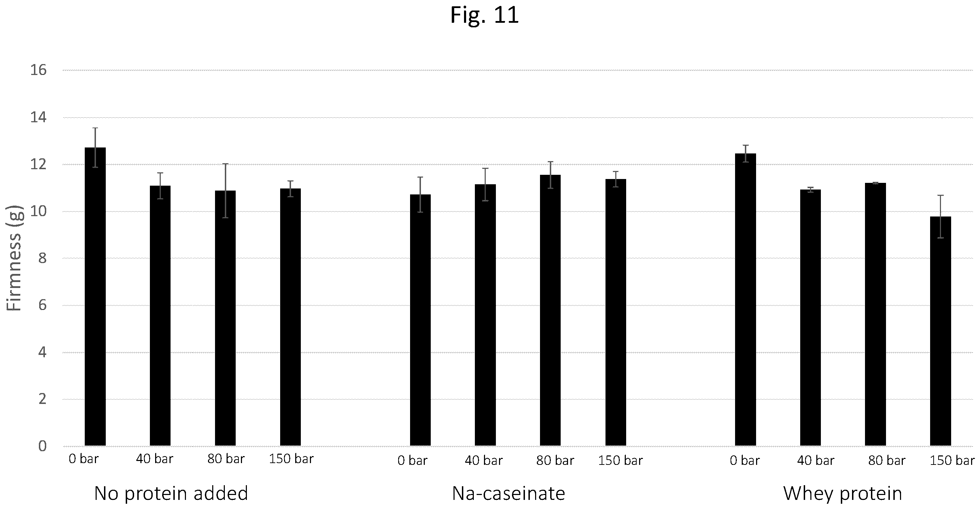

The product properties (texture, firmness and viscosity) of all the samples were however similar to that of samples without added proteins. All the products were soft, creamy and remained in liquid state after cooling and storage at 5 degrees C. No effect of increasing the homogenisation pressure was observed. This was also corroborated with the results from the firmness analysis (figure 11) which showed a lower firmness values similar to the results from example 3.

**Table 4: Composition of cream before and after washing, before and after concentration by microfiltration and diafiltration, and standardization.**

| Samples | Composition (%, w/w) | | | |
|---|---|---|---|---|
| | Fat | Protein (casein:whey protein)¹ | Dry matter | Micellar casein of total water² |
| Cream before washing | 38.01 | 2.20 (80:20) | 44.05 | 3.15 |
| Cream after washing | 37.70 | 0.3 (80:20) | 37.7 | 0.39 |
| Cream after concentration by MF | 74.33 | 0.54 (83:17) | 74.76 | 1.78 |
| Standardised cream before homogenization | 60.08 | 0.38 (83:17) | 60.78 | 0.80 |
| Standardised cream with added Na-caseinate | 59.99 | 1.88 (97:3) | 60.53 | 0.80 |
| Standardised cream with added whey protein | 59.24 | 0.66 (52:48) | 60.15 | 0.79 |

| | | | | |
|---|---|---|---|---|
| ¹ Casein to whey protein ratio in the final product calculated based on the composition of proteins in the feed before microfiltration and permeate after microfiltration. ² Calculated assuming that nearly 100% of the casein is in micellar form at 45 degrees C. | | | | |

### Example 5: Preparation of butter-like product using concentrated cream by microfiltration and further ingredients

Twelve samples of butter-like products of the invention are prepared using a standardised concentrated cream (the MFG source; 60% w/w fat; prepared according to Example 1), salt, cultured milk, and rapeseed oil (in some of the samples). The standardised concentrated cream is pasteurised and subsequently mixed with salt, lactic culture, different levels of vegetable oil to prepare liquid milk fat globule composition (Imc) before or after homogenisation steps. The Imc composition is homogenised at different pressures (40 or 80 bar) to modulate the texture (firmness) of the final butter-like product. After the mixing and homogenisation the obtained samples of butter-like product are cooled to 5 degrees C. The used recipes and selected characteristics of the samples of butter-like product are shown in Table 5.

**Table 5: Recipes of the samples of butter-like product (BLP) and selected characteristics.**

| | BLP-1 | BLP-2 | BLP-3 | BLP-4 | BLP-5 | BLP-6 |
|---|---|---|---|---|---|---|
| **Ingredients** | | | | | | |
| Standardised concentrated cream | 96 | 91 | 86 | 96 | 91 | 86 |
| Salt (% w/w) | 1.2 | 1.2 | 1.2 | 1.2 | 1.2 | 1.2 |
| Cultured milk (% w/w) | 2.8 | 2.8 | 2.8 | 2.8 | 2.8 | 2.8 |
| Rapeseed oil (% w/w) | 0 | 5 | 10 | 0 | 5 | 10 |

| **Characteristics** | | | | | | |
|---|---|---|---|---|---|---|
| Water content in the final product (% w/w) | 33 | 31 | 29 | 33 | 31 | 29 |
| pH | 5.2 | 5.2 | 5.2 | 5.2 | 5.2 | 5.2 |
| Pressure-difference during homogenisation | 40 | 40 | 40 | 80 | 80 | 80 |
| Addition of vegetable oil, cultured milk and salt | Prior to homogenisation | Prior to homogenisation | Prior to homogenisation | Prior to homogenisation | Prior to homogenisation | Prior to homogenisation |

**Table 5 - continued**

| | BLP-7 | BLP-8 | BLP-9 | BLP-10 | BLP-11 | BLP-12 |
|---|---|---|---|---|---|---|
| **Ingredients** | | | | | | |
| Standardised concentrated cream | 96 | 91 | 86 | 96 | 91 | 86 |
| Salt (% w/w) | 1.2 | 1.2 | 1.2 | 1.2 | 1.2 | 1.2 |
| Cultured milk (% w/w) | 2.8 | 2.8 | 2.8 | 2.8 | 2.8 | 2.8 |
| Rapeseed oil (% w/w) | 0 | 5 | 10 | 0 | 5 | 10 |

| **Characteristics** | | | | | | |
|---|---|---|---|---|---|---|
| Water content in the final product (% w/w) | 33 | 31 | 29 | 33 | 31 | 29 |
| pH | 5.2 | 5.2 | 5.2 | 5.2 | 5.2 | 5.2 |
| Pressure-difference during homogenisation | 40 | 40 | 40 | 80 | 80 | 80 |
| Addition of vegetable oil, cultured milk and salt | After the homogenisation | After the homogenisation | After the homogenisation | After the homogenisation | After the homogenisation | After the homogenisation |

### Conclusions:

In the present examples, the inventors have found that concentrated cream with intact fat globules produced by gentle microfiltration, which causes minimum damage to milk fat globules, can be used to make butter-like spreadable products. After microfiltration, the concentrated cream containing mainly micellar casein and some whey proteins is standardised to a desired fat level (for example to 60%, w/w), pasteurised, homogenised (mechanical shear treatment) at warm temperature (45 degrees C), packaged and stored at 5 degrees C. The obtained product has a unique and surprising properties like butter and spreads in terms of structure and functionality (texture, spreadability). Such a product could be made using a simple but yet a continuous process compared to conventional methods of butter making that involves cream aging and treatments like churning.

The experiments reported in the present examples showed that micellar casein plays a significant role in the structure formation. In the presence of micellar casein (naturally present in the cream or added) could increase the firmness of the product but not in its absence. However, addition of caseinates or addition of a substance that disintegrate micellar caseins to individual casein proteins such as sodium citrate prior to mechanical shear (e.g. homogenisation) do not increase the firmness but produce a stable liquid cream products even at high fat concentration (60%, w/w) and presence of substantial concentration of micellar caseins.

## Claims

1. A method of producing a butter-like product, the method comprising the steps of:
a) providing a liquid, milk fat globule composition (Imc), preferably having a temperature in the range of 20-65 degrees C and a pH in the range of 4.5-8,
the Imc comprising:
i) milk fat globules (MFG) in an amount of at least 50% w/w of the Imc,
ii) at least 1.5% w/w micellar casein relative to the weight of the water content of the Imc,
iii) water, and
iv) optionally, one or more additional component(s),
b) optionally, but preferably, subjecting the Imc to a heat-treatment in which the Imc is heated to a temperature of at least 66 degrees C,
c) subjecting the Imc obtained from step a) or b) to a shearing step, and wherein the temperature of the Imc during the shearing step is in the range of 25-100 degrees C, thereby obtaining a milk fat intermediate,
d) optionally, combining the milk fat intermediate and one or more further ingredient(s), thereby obtaining a mixture, and
e) optionally, packaging the milk fat intermediate obtained from step c) or the mixture obtained from step d),
wherein the MFG originate from cow milk,
and wherein the butter-like product is the milk fat intermediate obtained from step c), the mixture obtained from step d), or the packaged product obtained from step e).

2. The method according to claim 1 wherein at least 50% w/w of the MFG of the Imc is provided by one or more MFG source(s) containing MFG in an amount of at least 50% w/w relative to the weight of the source, preferably prepared by microfiltration and/or centrifugation of milk, cream, or mixtures thereof.

3. The method according to any one of the preceding claims wherein the Imc comprises the one or more additional ingredient(s) which comprise one or more of the following:
- water
- fermented milk product
- sodium chloride,
- a flavouring agent, preferably diacetyl,
- a colouring agent,
- a food acceptable preservative, preferably sodium sorbate,
- a polysaccharide hydrocolloid,
- a protein concentrate, preferably a whey protein concentrate, a concentrate of micellar casein, and/or a milk protein concentrate,
- a fat source, preferably vegetable fat and/or butter,
- a food acceptable antioxidant, and
- a vitamin.

4. The method according to any one of the preceding claims wherein the Imc comprises:
- MFG in an amount in the range of 50-85% w/w, more preferably in the range of 55-85% w/w, and most preferably in the range of 50-82% w/w, and/or
- water in the range of 10-49% w/w relative to total weight of the Imc, more preferably 10-44% w/w, and most preferably in the range of 10-39% w/w relative to total weight of the Imc.

5. The method according to any one of the preceding claims wherein the Imc comprises:
- MFG in an amount in the range of 50-70% w/w, more preferably in the range of 55-68% w/w, and most preferably in the range of 55-65% w/w, and/or
- water in the range of 15-49% w/w relative to total weight of the Imc, more preferably 20-44% w/w, and most preferably in the range of 25-44% w/w relative to total weight of the Imc.

6. The method according to any one of the preceding claims wherein the Imc comprises micellar casein in an amount in the range of 1.5-15% w/w relative to the water content of the Imc, more preferably 2-13% w/w, even more preferably 3-11% w/w, and most preferably in the range of 4-9% w/w relative to the water content of the Imc.

7. The method according to any one of the preceding claims wherein whey protein makes up at least 50% w/w of the protein of the Imc that is not micellar casein, more preferably at least 60% w/w, even more preferably at least 70% w/w and most preferably at least 80% w/w of the protein of the Imc that is not micellar casein.

8. The method according to any one of the preceding claims wherein the Imc comprises, or even consists of,:
- MFG source having a MFG content in the range of 55-65% w/w in an amount of 85-96% w/w of the Imc
- Sodium chloride in an amount of 0.2-2% w/w of the Imc
- Fermented milk in an amount of 1-4% w/w of the Imc
- Vegetable fat in an amount of 0-10% w/w of the Imc.

9. The method according to any one of the preceding claims wherein the Imc of step a) has a temperature in the range of 20-65 degrees C, more preferably 30-64 degrees C, even more preferably 40-63 degrees C, and most preferably 50-62 degrees C.

10. The method according to any one of the preceding claims wherein the shearing of step c) is performed using a pressure-based homogenizer and/or a mechanical homogenizer.

11. The method according to any one of the preceding claims wherein the duration of the shearing of step c) is sufficient to create a milk fat intermediate having a firmness in the range of 25-500 g at 5 degrees C when determined according to Analysis E, more preferably 50-450 g at 5 degrees C, even more preferably 100-400 g at 5 degrees C, and most preferably 200-400 g at 5 degrees C.

12. The method according to any one of the preceding claims wherein the temperature of the Imc during the shearing is:
- in the range of 25-100 degrees C, more preferably 30-95 degrees C, even more preferably 40-80 degrees C, and most preferably 50-65 degrees C, or
- in the range of 70-100 degrees C, more preferably 75-98 degrees C, even more preferably 80-96 degrees C, and most preferably 85-95 degrees C.

13. The method according to any of the preceding claims wherein the shearing of step c) involves the use of a pressure-based homogenizer, preferably operated with a pressure difference in the range of 5-300 bar, more preferably 10-200 bar, even more preferably 15-150 bar and most preferably 20-100 bar.

14. The method according to any one of the preceding claims comprising step d) of combining the milk fat intermediate and one or more further ingredient(s), and wherein the one or more further ingredient(s) comprise one or more of:
- water
- fermented milk product, preferably added in an amount in the range of 1-5% w/w relative to the weight of the mixture, more preferably 1.2-4%, and most preferably in the range of 1.5-3% w/w relative to the weight of the mixture,
- sodium chloride, preferably added in an amount in the range of 0.1-4.5% w/w relative to the weight of the mixture, more preferably 0.5-3.0% w/w, and most preferably 0.8-1.5% w/w relative to the weight of the mixture,
- a flavouring agent, preferably diacetyl,
- a colouring agent,
- a food acceptable preservative, preferably sodium sorbate,
- a polysaccharide hydrocolloid,
- a protein concentrate, preferably a whey protein concentrate, a concentrate of micellar casein, and/or a milk protein concentrate,
- a fat source, preferably vegetable fat and/or butter,
- a food acceptable antioxidant, and
- a vitamin, and
wherein:
- the milk fat intermediate is used in step d) in an amount sufficient to contribute with at least 50% w/w of the total fat of the mixture resulting from step d), more preferably at least 60% w/w, more preferably at least 70% w/w, and most preferably at least 80% w/w of the mixture resulting from step d), or
- the milk fat intermediate is used in step d) in an amount sufficient to contribute with 40-99% w/w of the total fat of the mixture resulting from step d), more preferably 45-90 w/w, more preferably 50-80% w/w, and most preferably 52-70% w/w of the mixture resulting from step d.

15. The butter-like product obtainable by the method according to one or more of claims 1-14, wherein the milk fat intermediate obtained from step c) is used in an amount sufficient to provide at least 50% w/w of the total fat of the butter-like product.

16. Use of the butter-like product according to claim 15 as an ingredient in the production of a food product, preferably wherein the butter-like product is used in amount to provide at least 5% w/w of the fat of the food product, more preferably at least 10% w/w, even more preferably at least 15% w/w, and most preferably at least 20%.

## Patentansprüche

1. Verfahren zum Produzieren eines butterähnlichen Produkts, wobei das Verfahren die Schritte umfasst zum:
a) Bereitstellen einer flüssigen Milchfettkügelchen-Zusammensetzung (Imc), die vorzugsweise eine Temperatur im Bereich von 20-65 Grad C und einen pH-Wert im Bereich von 4,5-8 aufweist,
wobei die Imc umfasst:
i) Milchfettkügelchen (MFG) in einer Menge von mindestens 50 Gew.-% der Imc,
ii) mindestens 1,5 Gew.-% an mizellarem Kasein in Bezug auf das Gewicht des Wassergehalts der Imc,
iii) Wasser, und
iv) optional eine oder mehrere zusätzliche Komponente(n),
b) optional, aber vorzugsweise, Unterziehen der Imc einer Wärmebehandlung, bei der die Imc auf eine Temperatur von mindestens 66 Grad C erhitzt wird,
c) Unterziehen der in Schritt a) oder b) erhaltenen Imc einem Scherungsschritt, wobei die Temperatur der Imc während des Scherungsschritts im Bereich von 25-100 Grad C liegt, wodurch ein Milchfett-Zwischenprodukt erhalten wird,
d) optional Kombinieren des Milchfett-Zwischenprodukts und einer oder mehrerer weiterer Zutat(en), wodurch ein Gemisch erhalten wird, und
e) optional Verpacken des in Schritt c) erhaltenen Milchfett-Zwischenprodukts oder des in Schritt d) erhaltenen Gemisches,
wobei die MFG aus Kuhmilch stammen,
und wobei das butterähnliche Produkt das in Schritt c) erhaltene Milchfett-Zwischenprodukt, das in Schritt d) erhaltene Gemisch, oder das in Schritt e) erhaltene verpackte Produkt ist.

2. Verfahren nach Anspruch 1, wobei mindestens 50 Gew.-% der MFG der Imc durch eine oder mehrere MFG-Quelle(n) bereitgestellt wird, die MFG in einer Menge von mindestens 50 Gew.-% in Bezug auf das Gewicht der Quelle enthält, vorzugsweise durch Mikrofiltration und/oder Zentrifugieren von Milch, Sahne oder Gemischen davon zubereitet.

3. Verfahren nach einem der vorstehenden Ansprüche, wobei die Imc die eine oder mehrere zusätzliche Zutat(en) umfasst, die eines oder mehrere vom Folgenden umfassen:
- Wasser
- fermentiertem Milchprodukt
- Natriumchlorid,
- einem Aromastoff, vorzugsweise Diacetyl,
- einem Farbstoff,
- einem lebensmittelverträglichen Konservierungsmittel, vorzugsweise Natriumsorbat,
- einem Polysaccharid-Hydrokolloid,
- einem Proteinkonzentrat, vorzugsweise einem Molkenproteinkonzentrat, einem Konzentrat aus mizellarem Kasein, und/oder einem Milchproteinkonzentrat,
- einer Fettquelle, vorzugsweise pflanzlichem Fett und/oder Butter,
- einem lebensmittelverträglichen Antioxidans, und
- einem Vitamin.

4. Verfahren nach einem der vorstehenden Ansprüche, wobei die Imc umfasst:
- MFG in einer Menge im Bereich von 50-85 Gew.-%, bevorzugter im Bereich von 55-85 Gew.-%, und besonders bevorzugt im Bereich von 50-82 Gew.-%, und/oder
- Wasser im Bereich von 10-49 Gew.-% in Bezug auf das Gesamtgewicht der Imc, bevorzugter 10-44 Gew.-%, und besonders bevorzugt im Bereich von 10-39 Gew.-% in Bezug auf das Gesamtgewicht der Imc.

5. Verfahren nach einem der vorstehenden Ansprüche, wobei die Imc umfasst:
- MFG in einer Menge im Bereich von 50-70 Gew.-%, bevorzugter im Bereich von 55-68 Gew.-%, und besonders bevorzugt im Bereich von 55-65 Gew.-%, und/oder
- Wasser im Bereich von 15-49 Gew.-% in Bezug auf das Gesamtgewicht der Imc, bevorzugter 20-44 Gew.-%, und besonders bevorzugt im Bereich von 25-44 Gew.-% in Bezug auf das Gesamtgewicht der Imc.

6. Verfahren nach einem der vorstehenden Ansprüche, wobei die Imc mizellares Kasein in einer Menge im Bereich von 1,5-15 Gew.-% in Bezug auf den Wassergehalt der Imc, bevorzugter 2-13 Gew.-%, noch bevorzugter 3-11 Gew.-%, und besonders bevorzugt im Bereich von 4-9 Gew.-% in Bezug auf den Wassergehalt der Imc umfasst.

7. Verfahren nach einem der vorstehenden Ansprüche, wobei Molkenprotein mindestens 50 Gew.-% des Proteins der Imc, das kein mizellares Kasein ist, bevorzugter mindestens 60 Gew.-%, noch bevorzugter mindestens 70 Gew.-% und besonders bevorzugt mindestens 80 Gew.-% des Proteins der Imc, das kein mizellares Kasein ist, ausmacht.

8. Verfahren nach einem der vorstehenden Ansprüche, wobei die Imc umfasst, oder sogar besteht aus:
- MFG-Quelle, die einen MFG-Gehalt im Bereich von 55-65 Gew.-% in einer Menge von 85-96 Gew.-% der Imc aufweist
- Natriumchlorid in einer Menge von 0,2-2 Gew.-% der Imc
- Fermentiertem Milch in einer Menge von 1-4 Gew.-% der Imc
- Pflanzlichem Fett in einer Menge von 0-10 Gew.-% der Imc.

9. Verfahren nach einem der vorstehenden Ansprüche, wobei die Imc aus Schritt a) eine Temperatur im Bereich von 20-65 Grad C, bevorzugter 30-64 Grad C, noch bevorzugter 40-63 Grad C und besonders bevorzugt 50-62 Grad C aufweist.

10. Verfahren nach einem der vorstehenden Ansprüche, wobei das Scheren aus Schritt c) unter Verwendung eines druckbasierten Homogenisators und/oder eines mechanischen Homogenisators durchgeführt wird.

11. Verfahren nach einem der vorstehenden Ansprüche, wobei die Dauer des Scherens in Schritt c) ausreicht, um ein Milchfett-Zwischenprodukt zu erzeugen, das eine Festigkeit im Bereich von 25-500 g bei 5 Grad C, wenn diese gemäß Analyse E bestimmt wird, bevorzugter 50-450 g bei 5 Grad C, noch bevorzugter 100-400 g bei 5 Grad C und besonders bevorzugt 200-400 g bei 5 Grad C aufweist.

12. Verfahren nach einem der vorstehenden Ansprüche, wobei die Temperatur der Imc beim Scheren liegt:
- im Bereich von 25-100 Grad C, bevorzugter 30-95 Grad C, noch bevorzugter 40-80 Grad C und besonders bevorzugt 50-65 Grad C, oder
- im Bereich von 70-100 Grad C, bevorzugter 75-98 Grad C, noch bevorzugter 80-96 Grad C und besonders bevorzugt 85-95 Grad C.

13. Verfahren nach einem der vorstehenden Ansprüche, wobei das Scheren in Schritt c) die Verwendung eines druckbasierten Homogenisators einbezieht, der vorzugsweise mit einer Druckdifferenz im Bereich von 5-300 bar, bevorzugter 10-200 bar, noch bevorzugter 15-150 bar und besonders bevorzugt 20-100 bar betrieben wird.

14. Verfahren nach einem der vorstehenden Ansprüche, umfassend Schritt d) zum Kombinieren des Milchfett-Zwischenprodukts und einer oder mehrerer weiterer Zutat(en), und wobei die eine oder mehrere weitere Zutat(en) eines oder mehrere umfassen von:
- Wasser
- fermentiertem Milchprodukt, vorzugsweise in einer Menge im Bereich von 1-5 Gew.-% in Bezug auf das Gewicht des Gemisches, bevorzugter 1,2-4%, und besonders bevorzugt im Bereich von 1,5-3 Gew.-% in Bezug auf das Gewicht des Gemisches zugesetzt,
- Natriumchlorid, vorzugsweise in einer Menge im Bereich von 0,1-4,5 Gew.-% in Bezug auf das Gewicht des Gemisches, bevorzugter 0,5-3,0 Gew.-%, und besonders bevorzugt 0,8-1,5 Gew.-% in Bezug auf das Gewicht des Gemisches zugesetzt,
- einem Aromastoff, vorzugsweise Diacetyl,
- einem Farbstoff,
- einem lebensmittelverträglichen Konservierungsmittel, vorzugsweise Natriumsorbat,
- einem Polysaccharid-Hydrokolloid,
- einem Proteinkonzentrat, vorzugsweise einem Molkenproteinkonzentrat, einem Konzentrat aus mizellarem Kasein, und/oder einem Milchproteinkonzentrat,
- einer Fettquelle, vorzugsweise pflanzlichem Fett und/oder Butter,
- einem lebensmittelverträglichen Antioxidans, und
- einem Vitamin, und
wobei:
- das Milchfett-Zwischenprodukt in Schritt d) in einer Menge verwendet wird, die ausreicht, um mit mindestens 50 Gew.-% des Gesamtfetts des aus Schritt d) resultierenden Gemisches, bevorzugter mindestens 60 Gew.-%, bevorzugter mindestens 70 Gew.-%, und besonders bevorzugt mindestens 80 Gew.-% des aus Schritt d) resultierenden Gemisches beizutragen, oder
- das Milchfett-Zwischenprodukt in Schritt d) in einer Menge verwendet wird, die ausreicht, um mit 40-99 Gew.-% des Gesamtfetts des aus Schritt d) resultierenden Gemisches, bevorzugter 45-90 Gew.-%, bevorzugter 50-80 Gew.-%, und besonders bevorzugt 52-70 Gew.-% des aus Schritt d resultierenden Gemisches beizutragen.

15. Butterähnliches Produkt, das durch das Verfahren nach einem oder mehreren der Ansprüche 1-14 erhältlich ist, wobei das aus Schritt c) erhaltene Milchfett-Zwischenprodukt in einer Menge verwendet wird, die ausreicht, um mindestens 50 Gew.-% des Gesamtfetts des butterähnlichen Produkts bereitzustellen.

16. Verwendung des butterähnlichen Produkts nach Anspruch 15 als Zutat bei der Produktion eines Lebensmittelprodukts, wobei das butterähnliche Produkt vorzugsweise in einer Menge verwendet wird, um mindestens 5 Gew.-% des Fettes des Lebensmittelprodukts, bevorzugter mindestens 10 Gew.-%, noch bevorzugter mindestens 15 Gew.-%, und besonders bevorzugt mindestens 20% bereitzustellen.

## Revendications

1. Procédé de production d'un produit de type beurre, le procédé comprenant les étapes consistant à :
a) fournir une composition liquide de globules de matière grasse du lait (Imc), présentant de préférence une température dans la plage de 20-65 degrés C et un pH dans la plage de 4,5-8,
la Imc comprenant :
i) des globules de matière grasse du lait (MFG) en une quantité d'au moins 50 % p/p de la Imc,
ii) au moins 1,5 % p/p de caséine micellaire par rapport au poids de la teneur en eau de la Imc,
iii) de l'eau, et
iv) facultativement, un ou plusieurs composants supplémentaires,
b) facultativement, mais de préférence, soumettre la lmc à un traitement thermique dans lequel la Imc est chauffée à une température d'au moins 66 degrés C,
c) soumettre la Imc obtenue à l'étape a) ou b) à une étape de cisaillement et dans lequel la température de la Imc pendant l'étape de cisaillement est dans la plage de 25-100 degrés C, ce qui permet d'obtenir un intermédiaire de matière grasse du lait,
d) facultativement, combiner l'intermédiaire de matière grasse du lait et un ou plusieurs ingrédients supplémentaires, ce qui permet d'obtenir un mélange, et
e) facultativement, conditionner l'intermédiaire de matière grasse du lait obtenu à l'étape c) ou le mélange obtenu à l'étape d),
dans lequel les MFG proviennent du lait de vache,
et dans lequel le produit de type beurre est l'intermédiaire de matière grasse du lait obtenu à l'étape c), le mélange obtenu à l'étape d) ou le produit conditionné obtenu à l'étape e).

2. Procédé selon la revendication 1, dans lequel au moins 50 % p/p des MFG de la Imc sont fournis par une ou plusieurs sources de MFG contenant des MFG en une quantité d'au moins 50 % p/p par rapport au poids de la source, de préférence préparés par microfiltration et/ou centrifugation de lait, de crème ou de mélanges de ceux-ci.

3. Procédé selon l'une quelconque des revendications précédentes, dans lequel la Imc comprend les un ou plusieurs ingrédients supplémentaires qui comprennent un ou plusieurs des éléments suivants :
- de l'eau
- du produit de lait fermenté
- du chlorure de sodium,
- un agent aromatisant, de préférence du diacétyle,
- un agent colorant,
- un conservateur alimentaire acceptable, de préférence du sorbate de sodium,
- un hydrocolloïde polysaccharidique,
- un concentré de protéines, de préférence un concentré de protéines de lactosérum, un concentré de caséine micellaire et/ou un concentré de protéines du lait,
- une source de matière grasse, de préférence de la matière grasse végétale et/ou du beurre,
- un antioxydant alimentaire acceptable, et
- une vitamine.

4. Procédé selon l'une quelconque des revendications précédentes, dans lequel la Imc comprend :
- des MFG en une quantité dans la plage de 50-85 % p/p, plus préférentiellement dans la plage de 55-85 % p/p et le plus préférentiellement dans la plage de 50-82 % p/p, et/ou
- de l'eau dans la plage de 10-49 % p/p par rapport au poids total de la Imc, plus préférentiellement de 10-44 % p/p et le plus préférentiellement dans la plage de 10-39 % p/p par rapport au poids total de la Imc.

5. Procédé selon l'une quelconque des revendications précédentes, dans lequel la Imc comprend :
- des MFG en une quantité dans la plage de 50-70 % p/p, plus préférentiellement dans la plage de 55-68 % p/p et le plus préférentiellement dans la plage de 55-65 % p/p, et/ou
- de l'eau dans la plage de 15-49 % p/p par rapport au poids total de la Imc, plus préférentiellement de 20-44 % p/p et le plus préférentiellement dans la plage de 25-44 % p/p par rapport au poids total de la Imc.

6. Procédé selon l'une quelconque des revendications précédentes, dans lequel la Imc comprend de la caséine micellaire en une quantité dans la plage de 1,5-15 % p/p par rapport à la teneur en eau de la Imc, plus préférentiellement de 2-13 % p/p, encore plus préférentiellement de 3-1 % p/p et le plus préférentiellement dans la plage de 4-9 % p/p par rapport à la teneur en eau de la Imc.

7. Procédé selon l'une quelconque des revendications précédentes, dans lequel la protéine de lactosérum représente au moins 50 % p/p de la protéine de la Imc qui n'est pas de la caséine micellaire, plus préférentiellement au moins 60 % p/p, encore plus préférentiellement au moins 70 % p/p et le plus préférentiellement au moins 80 % p/p de la protéine de la Imc qui n'est pas de la caséine micellaire.

8. Procédé selon l'une quelconque des revendications précédentes, dans lequel la Imc comprend, ou même consiste en :
- une source de MFG, présentant une teneur en MFG dans la plage de 55-65 % p/p, en une quantité de 85-96 % p/p de la Imc
- du chlorure de sodium en une quantité de 0,2-2 % p/p de la Imc
- du lait fermenté en une quantité de 1-4 % p/p de la Imc
- de la matière grasse végétale en une quantité de 0-10 % p/p de la Imc.

9. Procédé selon l'une quelconque des revendications précédentes, dans lequel la Imc de l'étape a) présente une température dans la plage de 20-65 degrés C, plus préférentiellement de 30-64 degrés C, encore plus préférentiellement de 40-63 degrés C et le plus préférentiellement de 50-62 degrés C.

10. Procédé selon l'une quelconque des revendications précédentes, dans lequel le cisaillement de l'étape c) est effectué à l'aide d'un homogénéisateur à pression et/ou d'un homogénéisateur mécanique.

11. Procédé selon l'une quelconque des revendications précédentes, dans lequel la durée du cisaillement de l'étape c) est suffisante pour créer un intermédiaire de matière grasse du lait présentant une fermeté dans la plage de 25-500 g à 5 degrés C lorsqu'elle est déterminée selon une analyse E, plus préférentiellement de 50-450 g à 5 degrés C, encore plus préférentiellement de 100-400 g à 5 degrés C et le plus préférentiellement de 200-400 g à 5 degrés C.

12. Procédé selon l'une quelconque des revendications précédentes, dans lequel la température de la Imc pendant le cisaillement est :
- dans la plage de 25-100 degrés C, plus préférentiellement de 30-95 degrés C, encore plus préférentiellement de 40-80 degrés C et le plus préférentiellement de 50-65 degrés C, ou
- dans la plage de 70-100 degrés C, plus préférentiellement de 75-98 degrés C, encore plus préférentiellement de 80-96 degrés C et le plus préférentiellement de 85-95 degrés C.

13. Procédé selon l'une quelconque des revendications précédentes, dans lequel le cisaillement de l'étape c) implique l'utilisation d'un homogénéisateur à pression, fonctionnant de préférence avec une différence de pression dans la plage de 5-300 bars, plus préférentiellement de 10-200 bars, encore plus préférentiellement de 15-150 bars et le plus préférentiellement de 20-100 bars.

14. Procédé selon l'une quelconque des revendications précédentes, comprenant l'étape d) de combinaison de l'intermédiaire de matière grasse du lait et d'un ou de plusieurs ingrédients supplémentaires et dans lequel les un ou plusieurs ingrédients supplémentaires comprennent un ou plusieurs éléments parmi :
- de l'eau
- du produit laitier fermenté, de préférence ajouté en une quantité dans la plage de 1-5 % p/p par rapport au poids du mélange, plus préférentiellement de 1,2-4 % et le plus préférentiellement dans la plage de 1,5-3 % p/p par rapport au poids du mélange,
- du chlorure de sodium, de préférence ajouté en une quantité dans la plage de 0,1-4,5 % p/p par rapport au poids du mélange, plus préférentiellement de 0,5-3,0 % p/p et le plus préférentiellement de 0,8-1,5 % p/p par rapport au poids du mélange,
- un agent aromatisant, de préférence du diacétyle,
- un agent colorant,
- un conservateur alimentaire acceptable, de préférence du sorbate de sodium,
- un hydrocolloïde polysaccharidique,
- un concentré de protéines, de préférence un concentré de protéines de lactosérum, un concentré de caséine micellaire et/ou un concentré de protéines du lait,
- une source de matière grasse, de préférence de la matière grasse végétale et/ou du beurre,
- un antioxydant alimentaire acceptable, et
- une vitamine, et
dans lequel :
- l'intermédiaire de matière grasse du lait est utilisé à l'étape d) en une quantité suffisante pour contribuer à au moins 50 % p/p de la matière grasse totale du mélange résultant de l'étape d), plus préférentiellement au moins 60 % p/p, plus préférentiellement au moins 70 % p/p et le plus préférentiellement au moins 80 % p/p du mélange résultant de l'étape d), ou
- l'intermédiaire de matière grasse du lait est utilisé à l'étape d) en une quantité suffisante pour contribuer à 40-99 % p/p de la matière grasse totale du mélange résultant de l'étape d), plus préférentiellement de 45-90 % p/p, plus préférentiellement de 50-80 % p/p et le plus préférentiellement de 52-70 % p/p du mélange résultant de l'étape d.

15. Produit de type beurre pouvant être obtenu par le procédé selon une ou plusieurs des revendications 1-14, dans lequel l'intermédiaire de matière grasse du lait obtenu à l'étape c) est utilisé en une quantité suffisante pour fournir au moins 50 % p/p de la matière grasse totale du produit de type beurre.

16. Utilisation du produit de type beurre selon la revendication 15 comme ingrédient dans la production d'un produit alimentaire, de préférence dans laquelle le produit de type beurre est utilisé en quantité pour fournir au moins 5 % p/p de la matière grasse du produit alimentaire, plus préférentiellement au moins 10 % p/p, encore plus préférentiellement au moins 15 % p/p et le plus préférentiellement au moins 20 %.
